# FASCICULE DE BREVET EUROPEEN

(11) **EP 0 418 122 B1**
(45) Date de publication et mention de la délivrance du brevet: **18.11.1993**
(21) Numéro de dépôt: 90402439.5
(22) Date de dépôt: 05.09.1990
(51) Int. Cl.: B01J 12/00, B01J 19/24, C01B 3/36

(54) **Réacteur d'oxydation à différentiel de perte de charge et son utilisation.**
Oxidationsreaktor mit differentiellem Druckverlust sowie seine Verwendung.
Oxidation reactor with differential pressure drop and its application .

(30) Priorité: 12.09.1989 FR 8912016; 21.06.1990 FR 9007915; 21.06.1990 FR 9007914; 21.06.1990 FR 9007913
(43) Date de publication de la demande: 20.03.1991
(73) Titulaire: INSTITUT FRANCAIS DU PETROLE, 92506 Rueil-Malmaison Cédex (FR)
(72) Inventeur: Alagy, Jacques, F-69260 Charbonnieres (FR); Broutin, Paul, F-69130 Ecully (FR); Busson, Christian, F-69260 Charbonnière (FR); Gougne, Yves, F-69700 Givors (FR); Weill, Jérome, F-69005 Lyon (FR)

(56) Documents cités:
- EP-B- 0 221 813
- EP-B- 0 231 706
- US-A- 3 467 504

## Description

La présente invention concerne un réacteur et son utilisation par exemple pour la mise en oeuvre de la réaction d'oxydation ménagée d'une charge oxydable par un gaz oxydant ou un mélange de gaz contenant au moins un gaz oxydant, c'est-à-dire un gaz permettant l'oxydation de ladite charge.

Elle s'applique plus spécialement à l'oxydation, de préférence lente et habituellement partielle, de charges oxydables telles que par exemple des hydrocarbures en vue de la préparation de gaz de synthèse comprenant essentiellement du monoxyde de carbone et de l'hydrogène pour la synthèse par exemple du méthanol et/ou d'alcools homologues supérieurs, et de l'ammoniac.

Bien que les gaz oxydants puissent être notamment l'oxygène, l'ozone ou les halogènes, on ne considérera, à titre d'exemple, dans la présente description que les réactions d'oxydation avec l'oxygène.

Il est connu de réaliser une oxydation partielle du méthane comme indiqué par exemple dans le brevet US-A-2621117.

Selon la description de ce brevet, la réaction se fait dans une flamme où le mélange de gaz n'est jamais parfait. Dans ces conditions, on atteint rapidement des températures élevées dans les régions riches en oxygène. Les gaz à haute température sont ensuite mélangés avec la majeure partie de la charge d'hydrocarbures à oxyder et provoquent le craquage des molécules et la formation de carbone, ce qui est très génant pour la suite du procédé. Il est alors nécessaire, si l'on veut opérer dans des conditions économiques, c'est-à-dire en particulier sans avoir à employer un excès d'oxygène, de prévoir, comme cela est en particulier enseigné dans un brevet récent US-A-4699631, une étape de dépoussiérage avant l'utilisation des gaz formés au cours de l'étape d'oxydation.

Par ailleurs il est également connu que les réactions d'oxydation peuvent être effectuées en utilisant le concept de coincement de flamme dont le principe est bien connu et décrit par exemple dans le livre de G. de Soete et A. Feugier "Aspects physiques et chimiques de la combustion" Editions TECHNIP pages 87 à 93, où l'on utilise l'effet de paroi pour diminuer la vitesse réactionnelle et éviter la propagation de la flamme.

Dans les procédé utilisant ce concept de coincement de la flamme, la présence d'oxygène, qui peut être pur ou dilué par des gaz inertes, et la température élévée, impliquant un flux thermique élevé, nécessitent des dispositifs d'arrêt de flamme permettant à la réaction de se poursuivre sans explosion, bien que l'on soit le plus souvent à l'intérieur des limites explosives (en particulier dans le cas de l'oxydation partielle du méthane).

Plusieurs brevets ou demandes de brevets récents sont d'ailleurs basés sur ce principe. On peut en particulier citer ceux au nom de la demanderesse EP-B-221813, EP-B-231706 et FR 2628727 et le brevet US-A-3467504.

La présente invention se situe dans le cadre de ce concept de coincement de la flamme et concerne notamment une amélioration notable de la technologie du réacteur.

Dans la technologie basée sur ce principe du coincement de flamme qui consiste à mettre en oeuvre une réaction d'oxydation sans flamme, on peut considérer que le réacteur est divisé en au moins deux parties très distinctes ayant chacune une fonction bien définie.

Dans au moins une première partie, appelée zone de mélange et comportant au moins un organe ou moyen de mélange, on cherche à réaliser le meilleur mélange possible entre les gaz réactifs (c'est-à-dire entre au moins un gaz oxydant et la charge oxydable) par exemple entre de l'air, du méthane et de la vapeur d'eau.

En de qui concerne cette première partie, où l'on réalise le mélange des gaz, on utilisera avantageusement tout type de mélangeur bien connu de l'homme du métier, et répondent en particulier aux critères suivants :
- assurer le meilleur mélange possible des gaz destinés à réagir et obtenir ainsi à l'entrée de la zone de réaction un mélange très homogène de charge oxydable et de gaz oxydant.
- éviter un démarrage significatif de la réaction d'oxydation au sein de cette zone de mélange.

A titre d'exemple, mais sans que cela soit limitatif, on pourra utiliser les systèmes de mélange décrits dans les documents de brevets, au nom de la demanderesse, cités ci-avant.

Dans au moins une deuxième partie du réacteur, appelée zone de réaction et comportant au moins un organe ou moyen de réaction, on laisse se développer la réaction. Cette zone peut être en totalité ou en partie garnie de catalyseur. La présente invention concerne en particulier la conception de cette deuxième partie du réacteur.

Dans les documents de brevets antérieurs, et en particulier dans ceux au nom de la demanderesse, cette deuxième partie du réacteur est conçue de manière à ce que la réaction puisse se développer dans une zone de réaction située sensiblement au centre du réacteur et entourée, soit directement, selon une technique bien connue de l'homme du métier lorsqu'on opère à haute température et sous pression relativement élevée, d'une couche de béton réfractaire ou de briques réfractaires isolantes faisant la liaison entre l'organe de réaction de cette zone centrale et l'enveloppe externe, habituellement métallique, du réacteur, soit d'un manchon en céramique dure, par exemple en mullite, entouré lui même d'une couche de béton réfractaire. Dans les deux cas les caractéristiques mécaniques, et en particulier celles du béton, sont le plus souvent insuffisantes pour permettre de très longues périodes de fonctionnement. On a en effet constaté, au cours de test de fonctionnement de longue durée, la formation de microfissures qui oblige l'arrêt du réacteur. Par ailleurs, dans le cas où le réacteur comprend un manchon en céramique dure entre la zone de réaction proprement dite et la couche de béton, si la formation de microfissures dans la couche de béton est habituellement retardée, il est, tout en restant dans des conditions acceptables de rapport des réactifs, relativement plus difficile d'éviter le démarrage de la réaction dans la zone de mélange. Cette difficulté est au moins en partie liée à la conductivité thermique importante du manchon en céramique dure, relativement épais par rapport à l'épaisseur des parois des canaux du monolithe, ce qui a pour effet de provoquer une augmentation de la température de la zone de mélange, d'où la difficulté à éviter le démarrage de la réaction.

Les principaux problèmes que l'on rencontre dans la mise en oeuvre des réactions d'oxydation, et en particulier dans celle mettant en jeu du méthane, de l'air et de la vapeur d'eau, sont bien connus de l'homme du métier. Dans le cas de cette oxydation du méthane, il est possible de calculer la composition des gaz et la température finale atteinte à l'équilibre à partir du moment où l'on connaît la composition, la température initiale des réactifs et la pression à laquelle on laisse s'installer l'équilibre dans des conditions adiabatiques.

Il est bien connu aussi que le passage de la température initiale, qui est la température après mélange et avant réaction, à la température finale, telle qu'elle est calculée comme indiquée ci-avant, ne se fait pas graduellement, mais que la température dans la zone de réaction passe par un maximum largement supérieur à la température finale. On peut se rapporter par exemple à la communication de Prettre et al publiée dans Transactions of the Faraday Society 1946, vol. 42, pages 335 à 340.

En effet, plusieurs réactions sont en compétition lors de l'avancement global de l'oxydation. Dès qu'une fraction du méthane a été convertie en monoxyde de carbone et hydrogène, prennent place, en particulier, des réactions très exothermiques et très rapides d'oxydation de l'hydrogène en eau et du monoxyde de carbone en dioxyde de carbone qui consomment initialement tout l'oxygène disponible. Les enthalpies de ces deux réactions étant très supérieures à celle de l'oxydation ménagée du méthane en monoxyde de carbone (CO) et hydrogène (H₂), il y a donc un excès d'enthalpie qui conduit à une élévation très importante de température, qui diminue ensuite par l'apparition de réactions endothermiques, plus lentes, comme, par exemple, la réaction du méthane et de l'eau pour donner du monoxyde de carbone et de l'hydrogène.

Ces dernières réactions sont habituellement appelées réactions de retour à l'équilibre. Il faut noter que très souvent ces réactions de retour à l'équilibre sont favorisées par la présence d'un catalyseur adéquat.

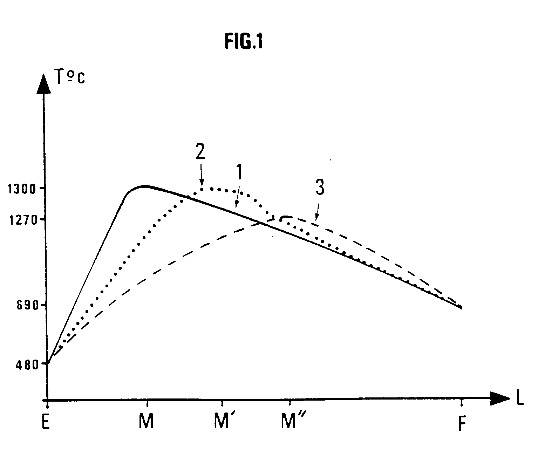

Dans les réacteurs de forme allongée que l'on utilise lorsque l'oxydation est effectuée suivant le principe du coincement de la flamme, on peut habituellement assimiler l'écoulement du mélange gazeux à un écoulement de type "piston" ce qui implique que le profil de température dans le sens de l'écoulement depuis l'entrée (E) de la zone de réaction jusqu'à la sortie (F) de cette zone est tel que celui représenté schématiquement sur la figure 1, sur laquelle on remarque que la température passe par un maximum (M) très élevé et situé à proximité de l'entrée de la zone de réaction (courbe 1).

Un tel profil de température, imposé par la thermodynamique et les cinétiques des réactions qui se déroulent dans la zone d'oxydation, impose une conception particulière du réacteur de manière à éviter au maximum les inconvénients qui lui sont inévitablement liés.

C'est ainsi que les matériaux utilisés dans la conception du réacteur doivent être capables d'accepter un gradient linéaire de température important sans destruction même partielle. Ils doivent par ailleurs résister à des pressions relativement importantes et qui peuvent par exemple atteindre 25 MPa.

Indépendamment de la conception du réacteur, les pertes thermiques seront d'autant plus importantes que la température maximale dans la zone de réaction sera plus élevée. Pour compenser ces pertes et afin d'obtenir la conversion voulue, on pourra par exemple augmenter la teneur en oxygène, cependant cette modification de la teneur en oxygène augmentera encore la température maximale et rendra donc plus difficile le contrôle de non démarrage de la réaction dans la zone de mélange, puisque les pressions partielles des réactifs seront plus importantes et que la température de ladite zone de mélange sera également plus élevée. Cela pourrait imposer de moins préchauffer les gaz avant mélange, ce qui n'est pas économiquement souhaitable.

Par ailleurs, dans la zone de réaction proprement dite du réacteur, plus la température est élevée, plus le risque de formation de coke est important, et il serait donc souhaitable de pouvoir opérer à la température la plus basse possible de manière à éviter au maximum les réactions de craquage du méthane qui se produisent d'autant plus facilement que la température est plus élevée et qui entraînent la formation de coke.

Un des objets de l'invention est de remédier aux inconvénients décrits ci-avant. Les objectifs que l'on se propose d'atteindre et qui répondent aux problèmes soulevés par l'art antérieur sont essentiellement les suivants :
- maintenir le dispositif "d'arrêt ou de coincement de flamme" évitant l'explosion et permettant cependant d'opérer à des températures pouvant atteindre plus de 1000°C, par exemple 1200°C ou 1400°C, avec le souci de protéger le réacteur et le dispositif mélangeur de la chaleur excessive dégagée lors de l'oxydation partielle ;
- obtenir un ensemble mécaniquement solide, capable de s'adapter aux gradients thermiques importants inhérents à un tel procédé et susceptible de fonctionner en continu pendant plusieurs dizaines d'heures ;
- limiter au maximum les pertes thermiques de manière à pouvoir maintenir un rapport entre les réactifs tel que la température maximale dans la zone de réaction ne soit pas trop élevée ;
- limiter le réchauffement de la zone de mélange par conduction de la chaleur dégagée dans la zone de réaction.

La présente invention propose un réacteur remédiant à la majorité des inconvénients de l'art antérieur. Dans sa conception la plus large l'invention concerne un réacteur d'oxydation de forme allongée, de préférence d'axe sensiblement vertical, comprenant en combinaison :
- au moins un organe de mélange comportant des moyens d'alimentation en gaz oxydant et des moyens d'alimentation en charge oxydable,
- au moins un organe de réaction, faisant suite audit organe de mélange et situé à une distance de celui-ci au plus égale à la distance de coincement de la flamme, et
- au moins un organe d'évacuation des produits réactionnels connecté audit organe de réaction,

l'organe de réaction comprenant une zone centrale comportant sur au moins une partie de sa section au moins un premier garnissage adapté à définir une multiplicité d'espaces présentant des passages ayant suivant au moins une direction une dimension au plus égale à la distance de coincement de la flamme pouvant résulter de l'oxydation de ladite charge, le réacteur d'oxydation étant caractérisé en ce qu'il renferme au moins une zone périphérique comportant sur au moins une partie de sa section au moins un second garnissage constitué de fibres céramiques formant un manchon entourant ledit premier garnissage,ledit manchon ayant une porosité représentant au moins 50 % de son volume et étant adapté à définir une multiplicité d'espaces présentant des passages ayant suivant au moins une direction une dimension de 2 à 1000 fois plus petite que la dimension des passages de la zone centrale, de sorte que la perte de charge dudit second garnissage est supérieure à celle dudit premier garnissage.

Dans le réacteur décrit ci-avant, pour un débit donné de charge oxydable et de gaz oxydant le différentiel de perte de charge entre la zone périphérique et la zone centrale (ΔP₂-ΔP₁) est habituellement d'au moins 10 Pascals et il peut atteindre ou même dépasser 0,5 MPa (mégapascal). Ce différentiel est de préférence de 100 Pascals à 0,4 MPa. Le manchon peut être un élément monobloc c'est-à-dire par exemple un élément s'étendant sur toute la longueur de la zone de réaction, ou même sur toute la longueur de la zone de mélange et de la zone de réaction ; il peut également être divisé en au moins deux tronçons de longueur égale ou inégale raccordés entre eux de manière à ce que la distance maximum entre eux soit au plus égale à 0,5 fois la distance de coincement de la flamme.

La dimension des passages dans la zone centrale de l'organe de réaction est habituellement au plus égale à 10⁻² mètre (m), avantageusement d'environ 5x10⁻⁵ à environ 10⁻³ m et de préférence d'environ 10⁻⁴ à environ 2x10⁻³ m. La dimension des passages dans ledit second garnissage de l'organe de réaction est de préférence de 5 à 100 fois plus petite que celle de ceux dudit premier garnissage de l'organe de réaction.

Dans une forme avantageuse de réalisation le garnissage de la zone centrale peut comprendre sur au moins une partie de la section de ladite zone au moins un monolithe comportant une pluralité de canaux juxtaposés, d'axes sensiblement parallèles entre eux et sensiblement parallèles à l'axe du réacteur, ayant, suivant au moins une direction, une dimension au plus égale à la distance de coincement de la flamme pouvant résulter de l'oxydation. Ces canaux ont une section de forme quelconque, par exemple polygonale, circulaire ou elliptique, mais préférentiellement polygonale et par exemple carrée, rectangulaire ou hexagonale.

La surface de la section des canaux est habituellement d'environ 25x10⁻¹⁰ mètre carré (m²) à environ 10⁻⁴ m² et de préférence d'environ 10⁻⁸ m² à environ 25x10⁻⁶ m². Tous les canaux peuvent être identiques ou différents, aussi bien par leur forme que par la surface de leur section ; ils seront de préférence identiques.

Le garnissage de la zone centrale peut comprendre, selon un autre mode de réalisation, des élément particulaires, par exemple sous forme de billes ou de bâtonnets. On utilisera de préférence des billes qui mises en contact, offrent un espace maximal de longueur au plus égal à leur rayon, ce qui permet de choisir la taille de ces billes en fonction de la distance de coincement de flamme voulue.

Il est également possible d'utiliser dans la zone centrale un garnissage comprenant au moins un monolithe, comportant une pluralité de canaux, tel que décrit ci-avant, lesdits canaux comportant dans au moins une partie de leur volume des éléments particulaires.

Selon un mode de réalisation particulier, la zone centrale de réaction peut comprendre dans au moins une partie de son volume au moins un catalyseur, par exemple un catalyseur supporté par les parois des canaux du monolithe, ou bien par les éléments particulaires. Ce catalyseur sera habituellement l'un de ceux, bien connus de l'homme du métier, favorisant par exemple les réactions endothermiques de retour à l'équilibre. A titre d'exemples non limitatifs de catalyseurs on peut citer ceux comprenant un support, par exemple d'alumine ou de silice, sur lequel on a déposé, par exemple, du chlorure de cuivre et du chlorure de potassium, de l'oxyde de vanadium éventuellement associé à du sulfate de potassium, du cérium, du lanthane, ou un composé de cérium ou de lanthane, du chrome, un métal du groupe VIII tel que par exemple le nickel et le fer, ou un composé de chrome ou d'un métal du groupe VIII tel que par exemple un composé de nickel ou de fer, du phosphomolybdate de bismuth, ou du molybdate de cobalt. Le catalyseur peut également comprendre des oxydes métalliques tels que des oxydes d'argent et/ou de cuivre et du carbure de silicium poreux recouvert d'argent. Dans une forme particulièrement avantageuse, on pourra disposer plusieurs catalyseurs de compositions différentes chacun d'entre eux étant disposé dans la zone de réaction à l'endroit où sa composition est la mieux adaptée pour favoriser par exemple la ou les réactions endothermiques souhaitées.

Selon un mode de réalisation préféré, le matériau utilisé pour réaliser le gamissage de la zone centrale sera choisi parmi les matériaux céramiques. Par le terme "matériau céramique", on désigne dans la présente description l'ensemble des matériaux qui ne sont ni organiques, ni métalliques (le terme métallique désignant les matériaux formés à partir des éléments de la classification périodique définis comme métaux à l'état d'oxydation zéro). Dans une forme avantageuse de réalisation, le garnissage sera formé par au moins un monolithe en céramique dure comportant une pluralité de canaux et obtenu par exemple par extrusion. A titre d'exemple de céramique pouvant être employée pour la réalisation du garnissage de la zone centrale, on peut citer : le carbure de silicium, l'alumine, la mullite, la zircone, la zircone-mullite, le titanate d'aluminium, le nitrure de bore, le nitrure de silicium, la cordiérite, les oxydes de métaux alcalino-terreux, les oxydes de métaux de transition et tout mélange de ces matériaux. On utilisera de préférence de la mullite, de l'alumine, de la zircone, ou de la zircone-mullite.

Il sera particulièrement avantageux de concevoir le garnissage de la zone centrale de manière à ce que les canaux soient formés par la superposition, et éventuellement la juxtaposition, d'une pluralité de monolithes de faible épaisseur, la distance entre chaque monolithe adjacent étant inférieure à la distance de coincement de la flamme et de préférence cette distance sera de 2 à 5 fois inférieure à la dimension des canaux dans un plan sensiblement perpendiculaire à leurs axes. Lorsque la section de chaque monolithe est égale à la section de la zone centrale de réaction, on obtient ainsi un empilement de pièces unitaires de faible épaisseur. Si la section de chaque monolithe est inférieure à la section de la zone centrale, on juxtaposera ces pièces unitaires de manière à former une couche ayant une section égale à celle de la zone centrale et on superposera une série de couche de manière à former les canaux dans ladite zone centrale. L'épaisseur de ces pièces unitaires pourra être par exemple de l'ordre d'environ 5x10⁻³ m à 0,5 m et le plus souvent d'environ 10⁻² m à environ 5x10⁻² m ; ces pièces seront par exemple des pièces de section carrée d'environ 1x10⁻² m à environ 0,5 m de côté, et le plus souvent d'environ 3x10⁻² m à environ 0,2 m.

Cette conception particulière du garnissage de la zone centrale, par empilement de pièces de faible épaisseur implique que la conduction, dans le sens de l'axe du réacteur, est moins importante que dans le cas d'une pièce unitaire ayant la dimension totale de la zone centrale ; ainsi la chaleur dégagée lors de la réaction d'oxydation sera moins retransmise vers la zone de mélange ce qui permettra un contrôle plus facile de sa température et donc du non démarrage de la réaction d'oxydation dans cette zone de mélange. Par ailleurs, selon cette conception, chaque pièce unitaire, étant donné sa faible épaisseur, ne supporte qu'un gradient de température relativement faible ; on aura donc moins de risque de casse. Un autre avantage de cette conception est la possibilité de déposer sur les parois de certaines de ces pièces un catalyseur, par exemple un catalyseur de vaporéformage, dont la composition peut être différente d'une pièce à l'autre ; on peut ainsi très facilement adapter la composition du catalyseur en fonction de l'emplacement de la pièce dans la zone de réaction, c'est-à-dire en fonction de l'avancement des réactions. Le catalyseur peut être déposé sur les parois des pièces unitaires par imprégnation ou par toute autre méthode bien connue de l'homme du métier.

Dans une forme de réalisation avantageuse, ledit second garnissage, formant un manchon entourant ledit premier garnissage, sera constitué de fibres céramiques. Ce manchon pourra être obtenu par compactage de fibres céramiques, in situ c'est-à-dire au sein même du réacteur, par exemple par application d'une pression ou au contraire par tirage sous vide ; une surpression ou une dépression d'environ 0,1 MPa est habituellement suffisante pour obtenir un manchon ayant une solidité suffisante ; ce manchon peut également être obtenu ex situ dans un moule selon le même procédé puis être mis en place dans le réacteur. De préférence le manchon sera réalisé de manière à ce que le rapport de sa densité apparente à la densité du matériau choisi pour le fabriquer soit d'environ 0,025 : 1 à environ 0,05 : 1. Selon ce mode de réalisation, les passages existant dans le manchon, contitués par les espaces interfibres, sont orientés de manière aléatoire, ce qui constitue un chicanage supplémentaire et augmente ainsi la perte de charge. Ces passages ont habituellement des caractéristiques d'orientation dans l'espace les uns par rapport aux autres et de dimension suivant au moins une direction telles que la réaction d'oxydation est très fortement freinée ou même ne se produit pas. Cependant, ces espaces ont une dimension suffisante pour que les gaz pénétrent à l'intérieur de l'enchevêtrement formé par les fibres compactées et permettent ainsi un équilibrage des pressions, ce qui autorise l'utilisation du réacteur sous des pressions élévées qui sont habituellement d'environ 1,5 MPa à environ 25 MPa, de préférence d'environ 2 MPa à environ 20 MPa et le plus souvent d'environ 2 MPa à environ 10 MPa. Le volume occupé par les espaces entre les fibres dans le manchon réalisé en fibres compactées, que l'on peut appeler porosité, peut avantageusement représenter jusqu'à 90 % ou même 95 % du volume du manchon. Cette porosité est de préférence constituée de pores ou espaces ayant suivant au moins une direction une dimension moyenne habituellement inférieure à environ 10⁻⁴ m et le plus souvent inférieure à environ 5x10⁻⁵ m, cette dimension étant le plus souvent d'environ 5x10⁻⁸ m à environ 5x10⁻⁵ m.

La longueur des divers organes qui composent le réacteur est habituellement de 10⁻² à 20 m. La longueur de la zone de réaction représente en général de 50 % à 90 % de la longueur totale du réacteur et la zone de mélange, par exemple de 5 % à 45 % de cette longueur, le reste représentant la longueur occupée par la zone d'évacuation des produits. Dans le cas d'un réacteur sensiblement cylindrique, le diamètre de la zone de réaction ainsi que celui de la zone de mélange sera habituellement de 5x10⁻² m à 3 m ; quant à la dimension du manchon son épaisseur sera habituellement égale au diamètre de la zone de réaction dans le cas de réacteur ayant une zone de réaction de 5x10⁻² à 2x10⁻¹ m et égale à environ la moitié de ce diamètre dans le cas de réacteur dont la zone de réaction a un diamètre de 2,1x10⁻¹ à 3 m**.**

Les fibres céramiques que l'on utilise pour fabriquer le manchon sont obtenues par des techniques classiques à partir des matériaux céramiques et par exemple à partir de ceux cités ci-avant. Les matériaux préférés sont les mêmes que ceux utilisés ci-avant pour le garnissage de la zone centrale et on pourra par exemple utiliser le même matériau pour réaliser les canaux de la zone centrale et le manchon de la zone périphérique, ou bien des matériaux différents.

La fibre utilisée est un produit isolant. Les pertes thermiques sont donc pratiquement nulles, et il est donc possible ainsi de travailler avec le rapport gaz oxydant/charge à oxyder souhaité, de limiter la valeur maximale de température dans le réacteur et donc de limiter la formation de coke et de permettre un contrôle optimum de la réaction et d'éviter facilement son démarrage dans la zone de mélange, ce qui fait que si l'on utilise un mélangeur à poudre par exemple, on peut utiliser la poudre la mieux adaptée en granulométrie et de ce fait limiter la perte de charge du mélangeur.

Le réchauffage par conduction de la zone de mélange sera lui aussi limité à la conduction des seules pièces en céramiques dures extrudées, la conduction due au manchon fibreux étant négligeable. Mais en plus, les extrudés ayant des parois très minces et étant individuellement peu épaisses, cela limite encore la conduction.

Une des grandes difficultés de ce genre de réacteur est de limiter les espaces libres non voulus afin d'éviter, comme cela a été mentionné ci-avant, tout risque de voir la réaction être non contrôlée dans une zone du réacteur. L'avantage d'utiliser un manchon fibreux réside dans le retrait qui est pris à haute température par la fibre. En effet, ce retrait qui peut être de quelques pour cent, couramment de 2 % à 5 %, aura tendance à enserrer le garnissage central. La fibre étant partiellement compressible, cela a pour effet de supprimer tout espace libre entre le manchon et les autres parties du réacteur avec lesquelles ledit manchon est en contact. Ce retrait pourra être effectué par chauffage à haute température de la zone centrale avant utilisation du réacteur pour effectuer la réaction d'oxydation, ou pourra être réalisé au cours du démarrage de la réaction d'oxydation. Les fibres céramiques utilisées, ayant une très faible conductivité thermique, ce retrait est en général plus important à proximité de la zone centrale, où la température est très élévée, qu'à la périphérie du manchon, ce qui permet compte tenu des caractéristiques mécaniques de ce manchon fibreux et du retrait plus important à proximité de la zone de réaction, d'éviter tout espace libre non souhaité entre le manchon et le gamissage de la zone centrale d'une part et avec la paroi en contact avec la paroi externe dudit manchon d'autre part.

Un autre avantage important réside dans les propriétés thermomécaniques de l'ensemble des pièces céramiques utilisées :
- en ce qui concerne la réfractérité de l'ensemble, la température maximale au sein du réacteur qui peut être de l'ordre de 1400 °C est largement inférieure à la température maximale d'utilisation des matériaux céramiques que l'on utilise couramment dans ce type d'application.
- en ce qui concerne le gradient thermique supporté, le manchon fibreux ou les quelques éléments permettant de le réaliser étant constitué par un enchevêtrement microscopique de fibres unitaires, il s'agit d'une structure relativement souple permettant d'encaisser le gradient susceptible d'apparaître et d'accepter l'ensemble des dilatations et/ou contractions pouvant en résulter.

Pour la réalisation de la zone centrale de l'organe de réaction, on utilise de préférence des matériaux céramiques à faible coefficient de conduction thermique et à parois minces afin de limiter au maximum cette conduction et de faire en sorte que le profil de température obtenu dans l'organe de réaction soit tel que le pic de température soit aussi éloigné que possible de l'extrémité du mélangeur.

Une possibilité pour éloigner physiquement ce pic de température de l'extrémité du mélangeur contiguë à l'organe de réaction est d'imposer aux gaz d'avoir une très grande vitesse linéaire, ce qui leur permet, pendant la période d'induction des réactions d'oxydation et le temps de montée vers le pic de température, de s'éloigner suffisamment de ladite extrémité du mélangeur.

Cependant, une autre contrainte thermo-cinétique des réactions d'oxydation impose de disposer d'un temps de séjour suffisamment grand, le plus souvent de l'ordre de quelques secondes, pour permettre aux réactions de retour à l'équilibre, thermiques ou thermo-catalytiques, de s'effectuer et au mélange de gaz ainsi produit d'atteindre la composition d'équilibre telle que prévue par les calculs de la thermodynamique.

Le réacteur tel que décrit ci-avant permet, en partie au moins, de répondre à ces deux contraintes apparemment contradictoires. Cependant, selon cette réalisation, plus la vitesse des gaz est élevée, plus il est nécessaire d'avoir une longueur de l'organe de réaction importante, ce qui peut conduire à des pertes de charge très importantes et risque en outre d'alourdir énormément le coût de fabrication du réacteur.

Selon une nouvelle première réalisation, on propose une amélioration de la conception du réacteur décrit ci-avant et plus particulièrement de la conception de l'organe de réaction de ce réacteur, permettant de mieux répondre aux deux contraintes mentionnées ci-dessus sans conduire à des pertes de charge inacceptables, ou simplement trop importantes. Elle permet en particulier de pouvoir travailler avec des vitesses de gaz à la sortie du mélangeur relativement grandes et donc d'éloigner le pic de température de l'organe de mélange, sans qu'il soit nécessaire d'augmenter énormément la longueur de l'organe de réaction, tout en limitant au maximum les pertes de charge.

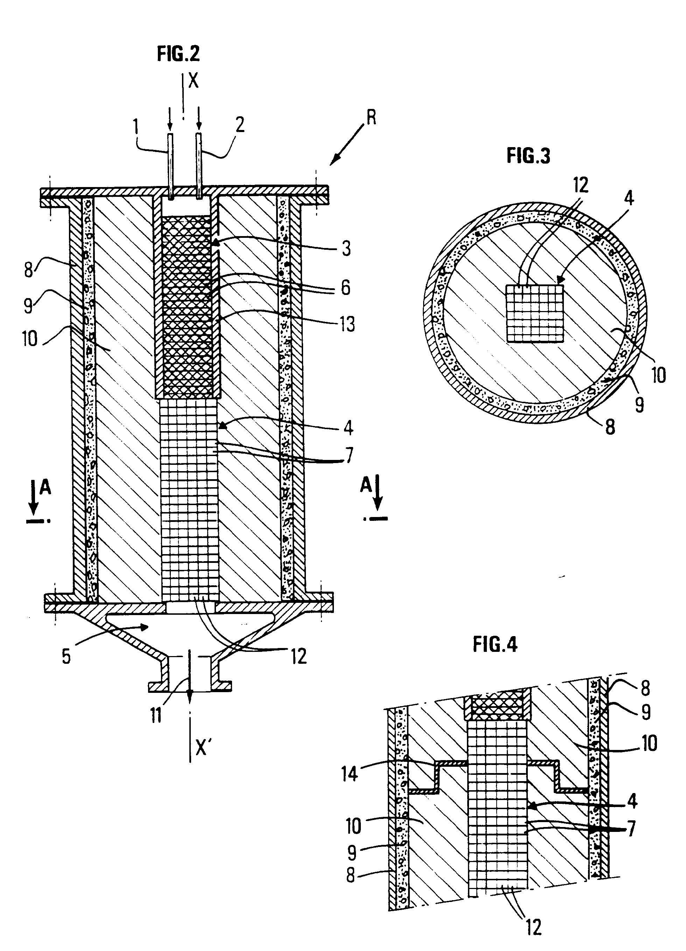

C'est ainsi que l'organe de réaction (voir figure 2 ci-après) comprend une première partie, côté organe de mélange, dont la zone centrale a une section de surface inférieure à la surface de la section d'au moins une deuxième partie de ladite zone centrale, subséquente de ladite première partie, côté organe d'évacuation. Ainsi la zone centrale (4) dudit organe de réaction a une forme telle que, dans au moins une partie de ladite zone centrale, située à proximité de l'organe de mélange (3), la vitesse des gaz est plus élevée que dans au moins une partie subséquente de ladite zone centrale, située en amont, dans le sens de déplacement des gaz, habituellement à proximité de l'organe (5) d'évacuation des produits réactionnels.

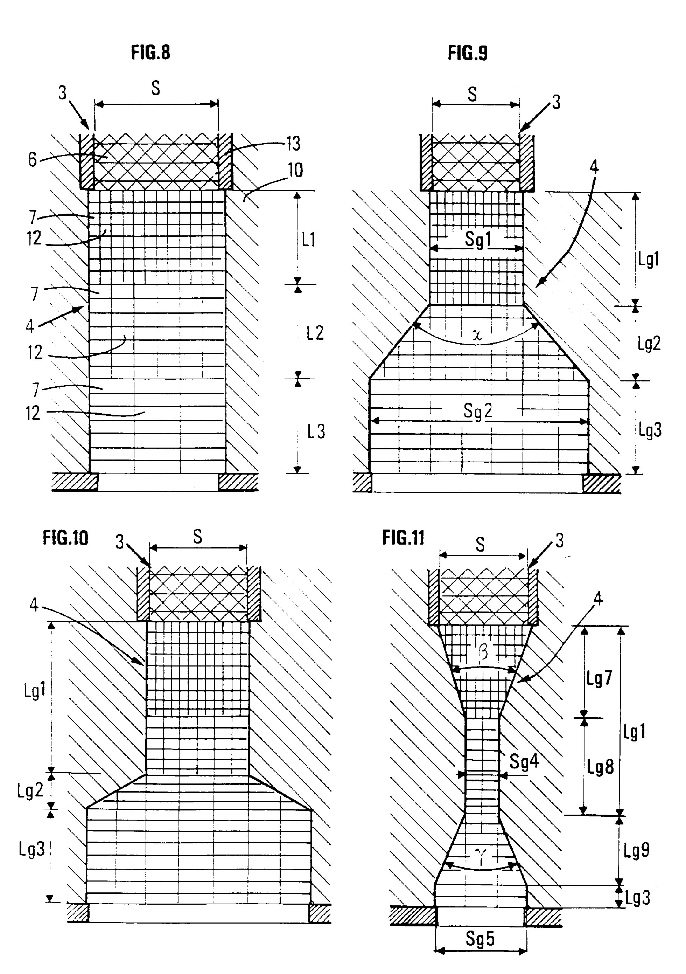

Selon une nouvelle deuxième réalisation permettant de pouvoir éloigner le pic de température maximum de l'organe de mélange et d'écrêter ce pic de température, la zone centrale de l'organe de réaction comprend s parties successives, s est un nombre entier positif supérieur ou égal à 2, caractérisé en ce que (voir figure 8), la première partie, côté organe de mélange, comporte un garnissage adapté à définir une multiplicité d'espaces présentant des passages dont la section a une surface S1, lesdits passages ayant suivant au moins une direction une dimension au plus égale à la distance de coincement de la flamme pouvant résulter de l'oxydation de ladite charge, et la dernière partie, côté organe d'évacuation, comporte un garnissage adapté à définir une multiplicité d'espaces présentant des passages dont la section a une surface Ss supérieure à S1, lesdits passages ayant suivant au moins une direction une dimension au plus égale à la distance de coincement de la flamme pouvant résulter de l'oxydation de ladite charge.

Habituellement, la zone centrale de l'organe de réaction comprend s parties successives comportant chacune un garnissage adapté à définir une multiplicité d'espaces présentant des passages dont la section a une surface croissante, d'une partie à la suivante, depuis la première partie jusqu'à la dernière partie. De préférence le nombre s est un nombre entier positif de 2 à 10 et le plus souvent de 3 à 6. Les surfaces S1 et Ss sont habituellement telles que le rapport Ss : S1 soit d'environ 100 :1 à environ 4 : 1 et fréquemment d'environ 50 : 1 à environ 4 : 1 et le plus souvent d'environ 25 : 1 à environ 10 : 1. Dans une forme de réalisation fréquente la zone centrale de l'organe de réaction comprend trois parties successives.

Dans ce cas le plus fréquent où la zone centrale comporte trois parties successives, la première partie, côté organe de mélange, comporte sur une longueur L1 un garnissage adapté à définir des passages dont la section a une surface S1, la deuxième partie, subséquente de ladite première partie, comporte sur une longueur L2 un garnissage adapté à définir des passages dont la section a une surface S2 et la troisième et dernière partie, côté organe d'évacuation, comporte sur une longueur L3 un garnissage adapté à définir des passages dont la section a une surface S3, lesdites surfaces S1, S2 et S3 étant telles que le rapport S3 : S1 soit d'environ 100 : 1 à environ 4 : 1, et le rapport S2 : S1 soit d'environ 50 : 1 à environ 1,2 : 1. Fréquemment le rapport S3 : S1 sera d'environ 50 : 1 à environ 4 : 1 et le plus souvent il sera d'environ 25 : 1 à environ 10 : 1 et le rapport S2 : S1 sera fréqemment d'environ 25 : 1 à environ 1,5 : 1 et le plus souvent il sera d'environ 10 : 1 à environ 2 : 1.

II est habituellement souhaitable de concevoir l'organe de réaction et en particulier le premier garnissage de manière à ce que la longueur L1 de ce garnissage et la surface S1 de la section des passages de ce garnissage soient telles que, pour la réaction d'oxydation considérée, le maximum de température soit atteint à une distance de l'organe de mélange au moins sensiblement égale à la valeur de la longueur L1. Le plus souvent, les caractéristiques de longueur L1 et L2 et de surface S1 et S2 de section de passage des deux premiers garnissages seront telles que le maximum de température soit atteint à une distance de l'organe de mélange sensiblement comprise entre la valeur de la longueur L1 et la valeur de la somme des longueurs L1 + L2.

La présente invention a également pour objet l'utilisation du réacteur dans un procédé d'oxydation d'une charge oxydable en phase gazeuse par un gaz oxydant ou un mélange de gaz comprenant au moins un gaz oxydant dans lequel on introduit la charge oxydable et le gaz oxydant dans une zone de mélange, on fait circuler le mélange gazeux issu de la zone de mélange dans une zone de réaction comportant une zone centrale et une zone périphérique, on établit une perte de charge ΔP₁ dans la zone centrale et une perte de charge ΔP₂ dans la zone périphérique, ces pertes de charge étant telles que l'on fait réagir sensiblement tout le mélange gazeux issu de la zone de mélange dans ladite zone centrale de ladite zone réactionnelle et que le différentiel de perte de charge ΔP₂-ΔP₁ soit positif, et on récupère les produits réactionnels formés. De préférence le différentiel de perte de charge est dans les gammes mentionnées ci-avant.

Selon une caractéristique secondaire on peut faire circuler le mélange gazeux à une vitesse V1 dans au moins une première partie de la zone centrale de la zone de réaction, côté zone de mélange et on peut faire circuler le mélange gazeux issu de ladite première partie à une vitesse Vf inférieure à la vitesse V1, dans au moins une autre partie subséquente de la première partie, côté zone d'évacuation des produits réactionnels.

Habituellement la vitesse V1 est d'environ 2 à environ 300m·s⁻¹, souvent cette vitesse V1 est d'environ 10 à environ 200 m·s⁻¹ et le plus souvent elle est d'environ 20 à environ 150 m·s⁻¹ et la vitesse Vf est habituellement d'environ 0,05 à environ 250 m·s⁻¹, souvent cette vitesse Vf est d'environ 0,1 à environ 100 m·s⁻¹ et le plus souvent elle est d'environ 1 à 100 m·s⁻¹.

Dans une forme de mise en oeuvre fréquente du procédé de la présente invention, le rapport des vitesses V1 : Vf est habituellement d'environ 2 : 1 à environ 50 : 1 et souvent ce rapport est d'environ 5 : 1 à environ 25 : 1 et, dans le cas le plus fréquent, ce rapport est d'environ 8 : 1 à environ 20 : 1.

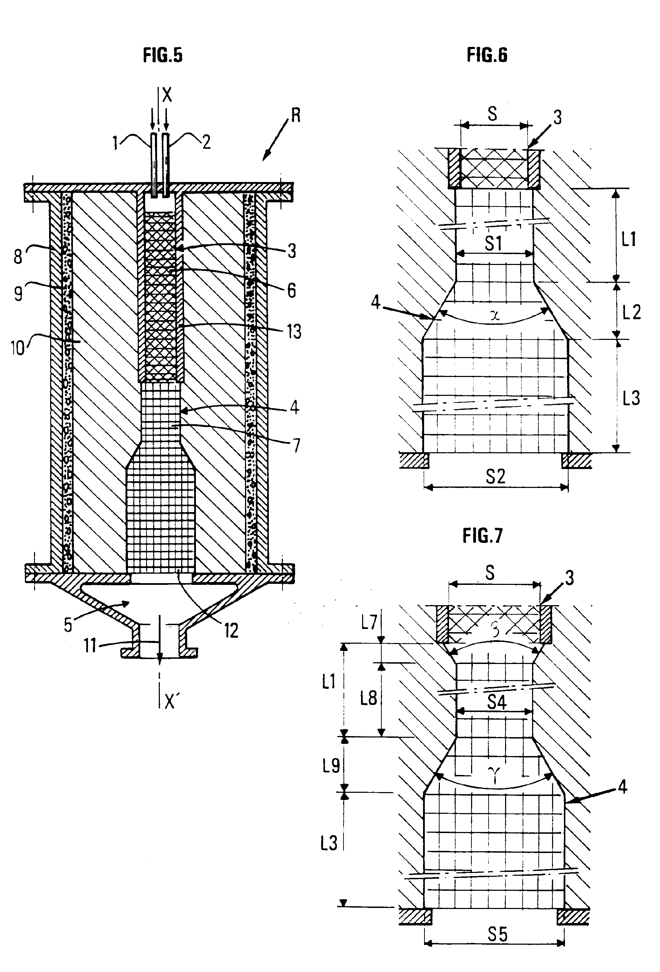

Selon les figures 6 et 9, l'organe de réaction du réacteur d'oxydation peut avoir une forme et des caractéristiques particulières permettant d'obtenir aisément les vitesses souhaitées du mélange gazeux dans les diverses zones dudit organe de réaction. La mise en circulation du mélange gazeux à une vitesse V1 dans au moins une première partie de la zone centrale de la zone de réaction peut être obtenue en réglant, pour un organe de réaction déterminé, le débit et/ou la pression des gaz introduits dans l'organe de mélange, la vitesse Vf étant alors essentiellement fonction des dimensions globales respectives des sections des diverses parties de l'organe de réaction.

C'est ainsi que selon la figure 6 la forme globale de tuyère de l'organe de réaction implique que la vitesse des gaz dans le col de la tuyère de longueur L1 est plus grande que dans la partie de longueur L3 faisant suite au divergent de longueur L2 et reliant ce divergent à l'organe d'évacuation des produits formés.

Il en est de même selon la figure 9 où, à la forme global de tuyère de l'organe de réaction s'ajoute le fait que la surface individuelle des canaux est plus faible à proximité de l'organe de mélange qu'à proximité de l'organe d'évacuation.

Selon le mode de réalisation illustré par la figure 11 décrite ci-dessous comportant un venturi, on effectue l'introduction de la charge et du gaz oxydant sous une pression et avec un débit tels que la vitesse du mélange gazeux au niveau du col de venturi est égale à V1, le mélange gazeux ayant ensuite à la sortie du divergent du venturi une vitesse Vf inférieure à la vitesse V1.

La charge oxydable est par exemple une charge d'hydrocarbures, en partiçulier une charge d'hydrocarbures aliphatiques saturés tel que le méthane et les effluents du procédé de réformage à la vapeur, l'orthoxylène, la naphtalène, le benzène, le méthanol, le mélange méthane-toluène et le mélange éthylène-acide chlorhydrique. On peut utiliser comme gaz oxydant par exemple de l'air ou de l'air enrichi en oxygène, sans inconvénients notables, et en particulier sans formation excessive de suies. Le réacteur décrit ci-avant est en particulier utilisable pour l'oxydation ménagée d'une charge d'hydrocarbures par un mélange de gaz comprenant de l'oxygène, en vue de produire un mélange de gaz, utilisable pour la synthèse de l'ammoniac ou la synthèse d'alcools, comprenant de l'hydrogène et du monoxyde de carbone. Dans une forme préférée de réalisation du procédé d'oxydation selon l'invention les gaz réactifs sont préchauffés de manière à ce que la température du mélange gazeux à l'entrée de la zone de réaction soit d'environ 300 °C à au plus 800 °C et le plus souvent d'environ 350 °C à environ 750 °C. Les rapports molaires gaz oxydant sur charge oxydable que l'on préconise, et par exemple le rapport molaire oxygène/méthane, sont habituellement de 0,5 : 1 à 0,75 : 1. Le temps de séjour des gaz réactifs dans la zone de réaction est habituellement d'environ 2 millisecondes à environ 10 secondes, et de préférence d'environ 50 millisecondes à environ 1 seconde. Il peut être avantageux d'amorcer la réaction d'oxydation dans la zone de réaction, de préférence dans la partie de la zone de réaction contiguë à la zone de mélange. Cet amorçage peut par exemple être réalisé par chauffage d'au moins une partie de la zone de réaction, par tout moyen connu de l'homme du métier, à une température au moins égale à 600 °C et de préférence de 700 °C à 1200 °C. Ce chauffage peut être effectué avant l'introdution de la charge oxydable et du gaz oxydant et/ou au moment du démarrage de cette introduction. Il n'est ni nécessaire, ni souhaitable de poursuivre ce chauffage après le démarrage de la réaction d'oxydation, celle-ci étant suffisamment exothermique pour se poursuivre sans apport de calories extérieures. Le chauffage peut, par exemple, être réalisé par injection de gaz chauds provenant d'un brûleur, par oxydation d'au moins un hydrocarbure (par exemple hexane et/ou heptane) par un gaz contenant de l'oxygène ou par de l'oxygène essentiellement pur, cet hydrocarbure et l'oxygène étant introduits dans ladite partie de la zone de réaction. L'amorçage peut également être effectué par d'autres moyens bien connus de l'homme du métier, par exemple à l'aide d'une étincelle produite par exemple à l'aide d'une bougie du type de celle que l'on utilise pour les moteurs à explosion, ou par un arc électrique produit, par exemple, entre deux électrodes.

L'invention sera mieux comprise par la description de quelques modes de réalisation, donnés à titre purement illustratif mais nullement limitatif qui en sera faite ci-après à l'aide des figures annexées, sur lesquelles les organes similaires sont désignés par les mêmes chiffres et lettres de référence.
- La figure 1 représente le profil de température (T °C en ordonnée), le long de l'axe XX' (en abscisse) du réacteur, dans la zone de réaction,
- La figure 2 représente un réacteur selon l'invention, suivant une coupe axiale,
- La figure 3 montre une coupe tranversale du réacteur, dans la zone de réaction, suivant l'axe AA' représenté sur la figure 2,
- La figure 4 montre une coupe axiale d'une partie de l'organe de réaction dans le cas où le manchon n'est pas monobloc.
- la figure 5 représente, suivant une coupe axiale, un réacteur selon une nouvelle première réalisation.
- la figure 6 représente suivant une coupe axiale, la partie inférieure d'un réacteur selon la nouvelle première réalisation.
- la figure 7 représente suivant une coupe axiale, la partie inférieure d'un réacteur selon un autre mode de la nouvelle première réalisation.
- les figures 8, 9, 10 et 11 représentent respectivement suivant une coupe axiale, un réacteur selon un premier, un deuxième, un troisième et un quatrième mode d'une deuxième nouvelle réalisation de la présente invention.

Sur la figure 1, la courbe 1 représente le profil de température (T °C en ordonnée), le long de l'axe XX' (longueur L en abcisse) d'un réacteur, tel que celui schématisé sur la figure 2 , dans la zone centrale de l'organe de réaction, à partir de l'entrée E jusqu'à la sortie F dudit organe ; le point M est le point correspondant au maximum, ou pic, de température. Ce profil de température, représenté par la courbe 1 sur la figure 1, est le profil de température pour la réaction d'oxydation du méthane, par de l'air, en présence de vapeur d'eau. Ce profil a été enregistré à l'aide de 20 thermocouples disposés régulièrement tout au long de l'organe de réaction à une distance les uns des autres égale à L/20 pour un organe de réaction de longueur L. Sur cette figure 1, les courbes 2 et 3 représentent respectivement le profil de température obtenu pour la réaction d'oxydation du méthane, par de l'air, en présence d'eau, en utilisant des réacteurs tels que ceux schématisés sur les figures 5 et 9 ; les points M' et M'' sont les points correspondants au maximum de température. Le réacteur utilisé pour tracer le profil de température représenté sur la courbe 2 avait un organe de réaction de même longueur que celui du réacteur utilisé pour tracer la courbe 1 et l'expérience a été conduite en conservant le même temps de séjour global dans l'organe de réaction, c'est-à-dire en conservant le même volume réactionnel. A partir de la détermination de l'emplacement du pic de température M, dans le cas de l'utilisation du réacteur schématisé sur la figure 5 on peut, en tenant compte du débit des gaz, déterminer le temps nécessaire pour atteindre ce pic. Si l'on utilise un réacteur tel que celui schématisé sur la figure 5 ayant le même volume réactionnel que celui schématisé sur la figure 2 et ayant servi à déterminer le temps nécessaire pour atteindre le pic de température, il est alors possible de calculer l'emplacement de ce pic M' dans ce réacteur tel que schématisé sur la figure 5.

Le réacteur utilisé pour tracer le profil de température représenté sur la courbe 3 de la figure 1 avait un organe de réaction tel que celui schématisé sur la figure 9 comportant sur une longueur L1 un premier garnissage ayant des canaux de section de surface S1, puis depuis le début de la partie divergente et sur une longueur L2 un deuxième garnissage ayant des canaux de section de surface S2 égale à Sm (section de surface d'un canal de l'organe de réaction selon la figure 2) et enfin sur une longueur L3 un troisième garnissage ayant des canaux de section de surface S3, la somme des longueurs L1 + L2 + L3 étant sensiblement égale à la longueur Lg de l'organe de réaction et les surfaces S1, S2 et S3 étant telles que S3 est plus grande que S2 qui est elle-même plus grande que S1. Il est ainsi facile connaissant, pour une réaction donnée et pour un débit donné, le volume Vmax nécessaire pour atteindre le pic de température dans le cas d'un réacteur tel que celui schématisé sur la figure 2, de prévoir la zone dans laquelle le pic de température sera atteint dans le cas d'un réacteur tel que celui schématisé par exemple sur la figure 8 ou 9 dont on connaît les dimensions des divers garnissages et des sections de passage de ces garnissages. On peut en effet être assuré que, si ce volume Vmax est atteint à une distance Lt de la sortie de l'organe de mélange, le pic de température sera atteint à une distance au moins égale à Lt, compte tenu du fait que le premier garnissage de la zone de réaction comporte des canaux unitaires de section de surface S1 inférieure à la surface Sm des canaux du garnissage de la zone de réaction du réacteur schématisé sur la figure 2 ayant servi à déterminer ce volume Vmax et que les cinétiques des réactions d'oxydation seront ralenties par suite des plus faibles dimensions des passages dans le premier garnissage.

Il est ainsi possible de choisir les dimensions des divers garnissages de manière à obtenir une position du pic de température suffisamment éloignée de la sortie de l'organe de mélange pour qu'il n'y ait pas de risque de réchauffement de l'organe de mélange par conduction de la chaleur dégagée dans la zone de réaction.

Sur les figures 2 et 3, on a représenté, selon un mode de réalisation, un réacteur R vertical, cylindrique, de forme allongée, d'axe XX' comprenant une paroi externe 8 en acier, un manchon en béton réfractaire 9 et un manchon en fibre céramique 10 et sensiblement en son centre un organe de mélange 3 comportant un moyen d'alimentation 1 en charge oxydable et un moyen d'alimentation 2 en gaz oxydant, ladite zone de mélange étant constituée par l'empilement d'une série de monolithes 6 de faible épaisseur, en céramique dure, à maille décalée et à canaux croisés ; ce réacteur comprend une série de monolithes 7 de faible épaisseur, comportant chacun une pluralité de canaux de section sensiblement carrée, lesdits monolithes étant superposés de manière à ce que l'on forme une pluralité de canaux 12 juxtaposés, sensiblement parallèles et s'étendant sur toute la longueur de la zone de réaction et formant l'organe de réaction 4 faisant suite à l'organe de mélange et qui débouche dans l'organe 5 d'évacuation des produits réactionnels par le conduit 11.

Sur la figure 4, on a représenté selon une coupe axiale une partie de l'organe de réaction comportant un manchon 10 divisé en plusieurs tronçons et formé ainsi par plusieurs éléments unitaires superposés. Une telle réalisation du manchon peut être imposée par la dimension du réacteur ou être choisie en fonction d'une plus grande facilité de fabrication ou de mise en place de ce manchon dans le réacteur. Dans le cas d'un manchon formé par la superposition de plusieurs éléments unitaires, la distance entre chaque élément sera de préférence de 2 à 1000 fois plus petite que la distance de coincement de la flamme. Il est préférable de concevoir ces éléments unitaires formant le manchon de la manière représentée sur la figure 4, de telle sorte qu'ils forment un chicanage dans lequel on peut éventuellement insérer un joint 14 en feutre céramique.

Sur la figure 5, on a représenté, un réacteur R vertical, cylindrique, de forme allongée, d'axe XX' comprenant une paroi externe 8 en acier, un manchon en béton réfractaire 9 et un manchon en fibre céramique 10 et sensiblement en son centre un organe de mélange 3 entouré d'une enveloppe métallique 13 étanche et comportant un moyen d'alimentation 1 en charge oxydable et un moyen d'alimentation 2 en gaz oxydant, ladite zone de mélange étant constituée par l'empilement d'une série de monolithes 6 de faible épaisseur, en céramique dure, à mailles décalées et à canaux croisés ; ce réacteur comprend un organe de réaction 4, ayant la forme globale d'une tuyère, et formé par la superposition d'une série de monolithes 7 de faible épaisseur, comportant chacun une pluralité de canaux de section sensiblement carrée, lesdits monolithes étant superposés de manière à ce que l'on forme une pluralité de canaux 12, juxtaposés et sensiblement parallèles, dont au moins une partie débouche dans l'organe 5 d'évacuation des produits réactionnels par le conduit 11. La forme globale de tuyère de l'organe de réaction confère à ce réacteur à gradient de perte de charge la qualité d'être aussi à gradient de vitesse de gaz.

Sur la figure 6, on a représenté plus en détail l'organe de réaction du réacteur schématisé sur la figure 5. Cet organe de réaction a la forme d'une tuyère de section de forme quelconque, définie par une courbe fermée telle que par exemple un cercle, une ellipse ou un polygone tel qu'un rectangle ou un carré, dont la surface S1 est plus faible à proximité de l'organe de mélange qu'à proximité de l'organe d'évacuation où elle est égale à S2. Dans le mode de réalisation schématisé sur cette figure 6, la tuyère a une section sensiblement carrée.

Dans la forme de réalisation schématisée sur la figure 6, la zone centrale de l'organe de réaction a, à proximité de l'organe de mélange, la forme d'une tuyère dont la section a, au niveau de son raccordement à l'organe de mélange (3) et sur une longueur L1, une surface S1 inférieure ou égale à environ la surface S de la section de l'organe de mélange au niveau dudit raccordement, puis sur une longueur L2 la surface de la section augmente, de façon sensiblement régulière, jusqu'à une valeur S2 égale à environ 1,5 à 500 fois S1, de préférence de 2 à 200 fois S1, et le plus souvent de 5 à 100 fois S1, et est ensuite maintenue sensiblement constante sur une longueur L3, la somme L des longueurs L1, L2 et L3 étant de préférence sensiblement égale à la longueur de ladite zone centrale dudit organe de réaction. On ne sortirait pas du cadre de la présente invention dans le cas où la longueur L3 serait égale à zéro. Habituellement, la longueur L1 est telle que pour la réaction d'oxydation considérée le maximum de température soit atteint à une distance de l'organe de mélange au moins sensiblement égale à 0,5 fois la valeur de cette longueur, de préférence au moins sensiblement égale à 0,8 fois la valeur de cette longueur et le plus souvent sensiblement comprise entre 0,8 et 1 fois la valeur de cette longueur, et la longueur L2 est habituellement telle que l'angle alpha (α)de la tuyère soit d'environ 15 à environ 120 degrés d'angle, cet angle étant le plus souvent d'environ 20 à environ 90 degrés d'angle et de préférence d'environ 30 à environ 60 degrés d'angle. La longueur L3 sera de préférence choisie de manière à ce que le temps de séjour total dans l'organe de réaction soit suffisant pour atteindre l'équilibre. Il est possible de conserver constante et égale à S2 la surface de la section de la tuyère sur une longueur L4, puis de diminuer ou d'augmenter progressivement cette section jusqu'à ce qu'elle ait une valeur S3 telle que le rapport de ces surfaces S2 : S3 soit par exemple d'environ 0,2 : 1 à environ 5 : 1, cette variation étant effectuée sur une longueur L5, la somme des longueurs L4 + L5 étant habituellement égale à la longueur L3 définie ci-avant. Il est parfois souhaitable d'obtenir, à la sortie de l'organe de réaction, des gaz ayant une vitesse relativement élevée ; dans ce cas, on peut diminuer la surface de la section de la tuyère à proximité de l'organe d'évacuation des produits réactionnels et on peut dans ce cas éventuellement choisir de maintenir ensuite constante cette section, par exemple sur une longueur L6 telle que la somme des longueurs L4 + L5 + L6 soit égale à la longueur L3 définie ci-avant.

Ainsi, en adoptant une section de passage relativement étroite en début de zone de réaction, section de surface par exemple, à peu près équivalente à celle de l'organe de mélange au niveau de son raccordement à l'organe de réaction ou à celle de l'organe d'éjection (non représenté sur les figures) des gaz hors du mélangeur, puis en évasant progressivement la partie interne tel que cela est représenté sur la figure 2, on éloigne l'emplacement du pic de température dans le réacteur et donc on minimise les risques d'échauffement de l'organe de mélange et on diminue ainsi les risques de déformation dudit organe et ceux de détérioration des matériaux qui le constituent. La conception de l'organe de réaction selon la présente invention permet de pouvoir plus préchauffer les gaz que l'on introduit dans l'organe de mélange, sans risque excessif pour celui-ci puisque le pic de température est, grâce à cette conception, relativement éloigné de l'extrêmité de l'organe de mélange, ce qui permet une conversion améliorée tout en conservant une marge de sécurité largement suffisante. L'organe d'éjection peut être un organe quelconque choisi parmi ceux bien connus de l'homme du métier. Le plus souvent, cet organe d'éjection est une simple grille et il a une section de surface à peu près équivalente à celle de l'organe de mélange au niveau de son raccordement avec celui-ci.

Sans que cela soit limitatif, la forme de la tuyère sera de préférence telle que, en début de zone de réaction, sa section ait une surface de passage S1 à peu près équivalente à la surface de l'organe d'éjection des gaz hors du mélangeur, ceci afin de limiter au maximum les turbulences à ce niveau.

Dans une forme de réalisation avantageuse, l'organe de réaction pourra par exemple dans au moins une partie de son volume et sur au moins une partie de la longueur L2 et/ou sur au moins une partie de la longueur L3 comprendre au moins un catalyseur tel que par exemple l'un des catalyseurs bien connu de l'homme du métier pour favoriser les réactions endothermiques de retour à l'équilibre.

Selon un autre mode de réalisation de la nouvelle première réalisation représenté sur la figure 7, la zone centrale de l'organe de réaction a, au moins dans une première partie située à proximité de l'organe de mélange, la forme d'un venturi comprenant un convergent et un divergent séparés par un col de préférence sensiblement rectiligne. Ce venturi est formé par la superposition d'une série de monolithes 7 de faible épaisseur, comportant chacun une pluralité de canaux de section sensiblement carrée, lesdits monolithes étant superposés de manière à ce que l'on forme une pluralité de canaux 12 juxtaposés et sensiblement parallèles dont au moins une partie débouche dans l'organe 5 d'évacuation des produits réactionnels par le conduit 11. Ces monolithes ont chacun individuellement une section de surface qui va en diminuant depuis une valeur de surface de préférence sensiblement égale à celle de la surface S de l'organe de mélange au niveau de son raccordement à l'organe de réaction jusqu'à une valeur S4 inférieure à S. La diminution de la surface de la section est effectuée sur une longueur L7 telle que l'angle bêta (ß) du convergent soit de préférence d'environ 30 à 120 degrés d'angle. Le col du venturi a de préférence une section de surface sensiblement constante et égale à S4 sur une longueur L8 telle que la somme des longueur L7 + L8 soit sensiblement égale à la longueur L1 définie ci-avant. On ne sortirait pas du cadre de la présente invention dans le cas où la longueur L7 serait sensiblement égale à la longueur L1, la longueur L8 étant alors sensiblement égale à zéro. Le divergent du venturi a habituellement à son extrémité une section dont la surface S5 est supérieure à celle dudit col et est de préférence au moins égale à celle de l'organe de mélange au niveau de son raccordement à l'organe de réaction. L'augmentation de la surface de la section est effectuée sur une longueur L9 telle que l'angle gamma (γ) du divergent soit de préférence d'environ 15 à 120 degrés d'angle. La somme des longueurs L1 + L9 peut être égale ou inférieure à la longueur L de l'organe de réaction. Dans le cas où la somme des longueurs L1 + L9 est inférieure à la longueur L de l'organe de réaction, la surface de la section à l'extrémité du divergent du venturi peut être maintenue sensiblement constante et égale à S5 sur une longueur L3 telle que la somme des longueurs L1 + L9 + L3 soit égale à la longueur L de l'organe de réaction. On ne sortirait pas du cadre de ce mode de réalisation en conservant constante la valeur S5 de la surface de la section à l'extrémité du venturi sur une longueur L4, puis en diminuant ou en augmentant progressivement cette section jusqu'à ce qu'elle ait une valeur S6 telle que le rapport de ces surfaces S5 : S6 soit par exemple d'environ 0,2 : 1 à environ 5 : 1, cette variation étant effectuée sur une longueur L5, la somme des longueurs L4 + L5 étant habituellement égale à la longueur L3 définie ci-avant. Il est parfois souhaitable d'obtenir, à la sortie de l'organe de réaction, des gaz ayant une vitesse relativement élevée et dans ce cas, on peut diminuer la surface de la section de l'organe de réaction à proximité de l'organe d'évacuation des produits réactionnels, ce qui revient à réaliser un deuxième convergent débouchant directement dans l'organe d'évacuation des produits réactionnels ou se prolongeant sur une longueur L6 avec une section de surface sensiblement constante jusqu'à l'organe d'évacuation des produits réactionnels, cette longueur L6 étant habituellement telle que la somme des longueurs L4 + L5 + L6 soit égale à la longueur L3 définie ci-avant. Il est de même possible, comme dans le mode de réalisation précédent, d'introduire au moins un catalyseur par exemple dans au moins une partie du volume réactionnel de l'organe de réaction et en particulier sur au moins une partie de la longueur L8 et/ou sur au moins une partie de la longueur L9 et/ou L3.

Comme précisé ci-avant, il est préférable, aussi bien dans le cas de la tuyère que dans le cas du venturi, que pour la réaction d'oxydation considérée le maximum de température soit atteint à une distance de l'organe de mélange sensiblement au moins égale à 0,8 fois la valeur de la longueur L1 et de façon la plus préférée que ce maximum soit atteint à une distance sensiblement comprise entre 0,8 fois et 1 fois la valeur de ladite longueur L1. En effet, ce choix présente plusieurs avantages :
- le pic de température est en général repoussé relativement loin du mélangeur, surtout si la surface de la section de la zone de réaction est relativement faible et donc la vitesse des gaz relativement grande,
- au niveau du pic de température, on aura ainsi une épaisseur du second garnissage formant un manchon (10) réalisé à l'aide d'un matériau réfractaire et isolant thermique, relativement importante, minimisant ainsi les pertes thermiques à ce niveau,
- enfin, la section de passage étant resserrée au niveau du pic de température, la capacité à emmagasiner de la chaleur sera réduite, les gaz emportant un maximum de celle-ci vers la suite du réacteur pour les réactions de retour à l'équilibre.

Sur la figure 8, on a représenté, selon un premier mode de la deuxième nouvelle réalisation de l'invention, un réacteur R vertical, cylindrique, de forme allongée, d'axe XX' comprenant une paroi externe 8 en acier, un manchon en béton réfractaire 9 et un manchon en fibre céramique 10 et sensiblement en son centre un organe de mélange 3 entouré d'une enveloppe métallique 13 étanche et comportant un moyen d'alimentation 1 en charge oxydable et un moyen d'alimentation 2 en gaz oxydant, ladite zone de mélange étant constituée par l'empilement d'une série de monolithes 6 de faible épaisseur, en céramique dure, à mailles décalées et à canaux croisés ; ce réacteur comprend un organe de réaction 4 dont la zone centrale a sur toute sa longueur une section de surface et de forme sensiblement constante ayant, dans le cas schématisé sur cette figure, la forme globale d'un parallélépipède rectangle, et formé par la superposition de trois garnissages successifs réalisés chacun à l'aide d'une série de monolithes 7 de faible épaisseur, comportant chacun une pluralité de canaux de section sensiblement carrée, lesdits monolithes étant superposés de manière à ce que l'on forme dans chaque garnissage une pluralité de canaux 12, juxtaposés et sensiblement parallèles, dont au moins une partie débouche dans l'organe 5 d'évacuation des produits réactionnels par le conduit 11. Le premier garnissage, côté organe de mélange, de longueur L1, comporte une pluralité de canaux ayant chacun une section de surface S1. Le deuxième garnissage, subséquent dudit premier garnissage, de longueur L2, comporte une pluralité de canaux ayant chacun une section de surface S2 supérieure à S1. Le troisième et dernier garnissage, côté organe d'évacuation, de longueur L3, comporte une pluralité de canaux ayant chacun une section de surface S3 supérieure à S2.

Sur la figure 9, on a représenté, selon un deuxième mode, un réacteur R vertical, cylindrique, de forme allongée, d'axe XX' comprenant un organe de réaction 4, ayant la forme globale d'une tuyère, et formé par la superposition de trois garnissages successifs réalisés chacun à l'aide d'une série de monolithes 7 de faible épaisseur, comportant chacun une pluralitè de canaux de section sensiblement carrée, lesdits monolithes étant superposés de manière à ce que l'on forme dans chaque garnissage une pluralitè de canaux 12, juxtaposés et sensiblement parallèles, dont au moins une partie débouche dans l'organe 5 d'évacuation des produits réactionnels par le conduit 11. Le premier garnissage, côté organe de mélange, de longueur L1 sensiblement égale à la longueur Lg1 du col de la tuyère, comporte une pluralité de canaux ayant chacun une section de surface S1. Le deuxième gamissage, subséquent dudit premier garnissage, de longueur L2 un peu plus grande que la longueur Lg2 du divergent de la tuyère, comporte une pluralité de canaux ayant chacun une section de surface S2 supérieure à S1. Le troisième et dernier garnissage, côté organe d'évacuation, de longueur L3, comporte une pluralité de canaux ayant chacun une section de surface S3 supérieure à S2. La forme globale de tuyère de l'organe de réaction confère à ce réacteur, à gradient de perte de charge et à contrôle progressif des cinétiques d'oxydation par augmentation progressive de la dimension des espaces libres dans l'organe de réaction depuis l'entrée de la charge dans la zone centrale de l'organe (4) de réaction jusqu'à la sortie des produits réactionnels formés, au niveau de l'organe (5) d'évacuation desdits produits, la qualité d'être aussi à gradient de vitesse de gaz.

Sur la figure 10, on a représenté selon un troisième mode, un réacteur R vertical, cylindrique, de forme allongée, d'axe XX' comprenant un organe de réaction 4, ayant la forme globale d'une tuyère, et formé par la superposition de trois garnissages successifs. Cette réalisation ne diffère de celle représentée sur la figure 3 que par le fait que le premier ganissage a une longueur L1 inférieure à la longueur du col de la tuyère. Dans cette réalisation, la somme des longueurs des deux premiers garnissages est sensiblement égale à la longueur du col de la tuyère, le troisième garnissage s'étendant depuis le début du divergent de la tuyère jusqu'au niveau de l'organe (5) d'évacuation des produits réactionnels.

Dans les formes de réalisation schématisées sur les figures 9 et 10, la zone centrale de l'organe de réaction a, à proximité de l'organe de mélange, la forme d'une tuyère dont la section a, au niveau de son raccordement à l'organe de mélange (3) et sur une longueur Lg1, une surface Sg1 inférieure ou égale à environ la surface S de la section de l'organe de mélange au niveau dudit raccordement, puis sur une longueur Lg2 la surface de la section augmente, de façon sensiblement régulière, jusqu'à une valeur Sg2 égale à environ 1,5 à 500 fois Sg1, de préférence de 2 à 200 fois Sg1, et le plus souvent de 5 à 100 fois Sg1, et est ensuite maintenue sensiblement constante sur une longueur Lg3, la somme Lg des longueurs Lg1, Lg2 et Lg3 étant de préférence sensiblement égale à la longueur de ladite zone centrale dudit organe de réaction. On ne sortirait pas du cadre de la présente invention dans le cas où la longueur Lg3 serait égale à zéro. Habituellement, le premier garnissage de l'organe de réaction a des caractéristiques de longueur L1 et de surface S1 de section de passage telles que, pour la réaction d'oxydation considérée, le maximum de température soit atteint à une distance de l'organe de mélange au moins sensiblement égale à la valeur de la longueur L1, indépendamment de la valeur de la longueur Lg1, de préférence ce maximum sera atteint à une distance comprise entre la valeur de la longueur L1 et la valeur de la somme des longueurs L1 + L2. La longueur Lg2 est habituellement telle que l'angle alpha (α) de la tuyère soit d'environ 15 à environ 120 degrés d'angle ; cet angle est le plus souvent d'environ 20 à environ 90 degrés d'angle et de préférence d'environ 30 à environ 60 degrés d'angle. La longueur Lg3 sera de préférence choisie de manière à ce que le temps de séjour total dans l'organe de réaction soit suffisant pour atteindre l'équilibre. Il est possible de conserver constante et égale à Sg2 la surface de la section de la tuyère sur une longueur Lg4, puis de diminuer ou d'augmenter progressivement cette section jusqu'à ce qu'elle ait une valeur Sg3 telle que le rapport de ces surfaces Sg2 : Sg3 soit par exemple d'environ 0,2 : 1 à environ 5 : 1, cette variation étant effectuée sur une longueur Lg5. La somme des longueurs Lg4 + Lg5 est habituellement égale à la longueur Lg3 définie ci-avant. Il est parfois souhaitable d'obtenir, à la sortie de l'organe de réaction, des gaz ayant une vitesse relativement élevée ; dans ce cas, on peut diminuer la surface de la section de la tuyère à proximité de l'organe d'évacuation des produits réactionnels et on peut, dans ce cas, éventuellement choisir de maintenir ensuite constante cette section par exemple sur une longueur Lg6 telle que la somme des longueurs Lg4 + Lg5 + Lg6 soit égale à la longueur Lg3 définie ci-avant.

Ainsi, en utilisant un organe de réaction comportant plusieurs garnissages successifs ayant chacun des canaux de section unitaire de surface croissante dans le sens de circulation de la charge et en adoptant une section globale de passage relativement étroite en début de zone de réaction, section globale de surface par exemple à peu près équivalente à celle de l'organe de mélange au niveau de son raccordement à l'organe de réaction ou à celle de l'organe d'éjection (non représenté sur les figures) des gaz hors du mélangeur, puis en évasant progressivement la partie interne, tel que cela est représenté sur les figures 9 et 10, on éloigne très largement l'emplacement du pic de température dans le réacteur et donc on minimise les risques d'échauffement de l'organe de mélange et on diminue ainsi les risques de déformation dudit organe et ceux de détérioration des matériaux qui le constituent. La conception de l'organe de réaction selon la présente invention permet de pouvoir plus préchauffer les gaz que l'on introduit dans l'organe de mélange, sans risque excessif pour celui-ci puisque le pic de température est, grâce à cette conception, écrêté et relativement éloigné de l'extrémité de l'organe de mélange, ce qui permet une conversion améliorée tout en conservant une marge de sécurité largement suffisante. L'organe d'éjection peut être un organe quelconque choisi parmi ceux bien connus de l'homme du métier. Le plus souvent, cet organe d'éjection est une simple grille et il a une section de surface à peu près équivalente à celle de l'organe de mélange au niveau de son raccordement avec celui-ci.

Sans que cela soit limitatif, la forme de la tuyère sera de préférence telle que, en début de zone de réaction, sa section ait une surface de passage Sg1 à peu près équivalente à la surface de l'organe d'éjection des gaz hors du mélangeur, ceci afin de limiter au maximum les turbulences à ce niveau.

Dans une forme de réalisation avantageuse, l'organe de réaction pourra, par exemple dans au moins une partie de son volume et sur au moins une partie de la longueur Lg2 et/ou sur au moins une partie de la longueur Lg3, comprendre au moins un catalyseur tel que par exemple l'un des catalyseurs bien connu de l'homme du métier pour favoriser les réactions endothermiques de retour à l'équilibre.

Selon un quatrième mode de réalisation de la deuxième nouvelle réalisation de la présente invention, représenté sur la figure 11, la zone centrale de l'organe de réaction a, au moins dans une première partie située à proximité de l'organe de mélange, la forme d'un venturi comprenant un convergent et un divergent séparés par un col de préférence sensiblement rectiligne. Ce venturi comporte trois garnissages formés chacun par la superposition d'une série de monolithes 7 de faible épaisseur, comportant chacun une pluralité de canaux de section sensiblement carrée, lesdits monolithes étant superposés de manière à ce que l'on forme une pluralité de canaux 12 juxtaposés et sensiblement parallèles dont au moins une partie débouche dans l'organe 5 d'évacuation des produits réactionnels par le conduit 11. Ces monolithes ont chacun individuellement une section globale de surface qui va en diminuant depuis une valeur de surface de préférence sensiblement égale à celle de la surface S de l'organe de mélange au niveau de son raccordement à l'organe de réaction jusqu'à une valeur Sg4 inférieure à S. La diminution de la surface de la section globale est effectuée sur une longueur Lg7 telle que l'angle béta (β) du convergent soit de préférence d'environ 30 à 120 degrés d'angle. Le col du venturi a de préférence une section globale de surface sensiblement constante et égale à Sg4 sur une longueur Lg8 telle que la somme des longueur Lg7 + Lg8 soit sensiblement égale à la longueur Lg1 définie ci-avant. On ne sortirait pas du cadre de la présente invention dans le cas où la longueur Lg7 serait sensiblement égale à la longueur Lg1, la longueur Lg8 étant alors sensiblement égale à zéro. Le divergent du venturi a habituellement à son extrémité une section globale dont la surface Sg5 est supérieure à celle dudit col et est de préférence au moins égale à celle de l'organe de mélange au niveau de son raccordement à l'organe de réaction. L'augmentation de la surface de la section globale est effectuée sur une longueur Lg9 telle que l'angle gamma (γ)du divergent soit de préférence d'environ 15 à 120 degrés d'angle. La somme des longueurs Lg1 + Lg9 peut être égale ou inférieure à la longueur Lg de l'organe de réaction. Dans le cas où la somme des longueurs Lg1 + Lg9 est inférieure à la longueur Lg de l'organe de réaction la surface de la section globale à l'extrémité du divergent du venturi peut être maintenue sensiblement constante et égale à Sg5 sur une longueur Lg3 telle que la somme des longueurs Lg1 + Lg9 + Lg3 soit égale à la longueur Lg de l'organe de réaction. On ne sortirait pas du cadre de cet autre mode de réalisation en conservant constante la valeur Sg5 de la surface de la section globale à l'extrémité du venturi sur une longueur Lg4, puis en diminuant ou en augmentant progressivement cette surface jusqu'à ce qu'elle ait une valeur Sg6 telle que le rapport de ces surfaces Sg5 : Sg6 soit par exemple d'environ 0,2 : 1 à environ 5 : 1, cette variation étant effectuée sur une longueur Lg5. La somme des longueurs Lg4 + Lg5 est habituellement égale à la longueur Lg3 définie ci-avant. Il est parfois souhaitable d'obtenir, à la sortie de l'organe de réaction, des gaz ayant une vitesse relativement élevée et dans ce cas on peut diminuer la surface de la section globale de l'organe de réaction à proximité de l'organe d'évacuation des produits réactionnels, ce qui revient à réaliser un deuxième convergent débouchant directement dans l'organe d'évacuation des produits réactionnels ou se prolongeant sur une longueur Lg6 avec une section globale de surface sensiblement constante jusqu'à l'organe d'évacuation des produits réactionnels, cette longueur Lg6 étant habituellement telle que la somme des longueurs Lg4 + Lg5 + Lg6 soit égale à la longueur Lg3 définie ci-avant. Il est de même possible, comme dans le mode de réalisation précédent, d'introduire au moins un catalyseur par exemple dans au moins une partie du volume réactionnel de la zone centrale de l'organe de réaction et en particulier sur au moins une partie de la longueur Lg8 et/ou sur au moins une partie de la longueur Lg9 et/ou Lg3.

Dans les divers modes de réalisation de la présente invention, l'organe de réaction a une section, de forme quelconque, définie par une courbe fermée telle que par exemple un cercle, une ellipse ou un polygone tel qu'un rectangle ou un carré. Dans le cas où cet organe a la forme d'une tuyère, celle-ci a une section globale dont la surface Sg1 est plus faible à proximité de l'organe de mélange qu'à proximité de l'organe d'évacuation où elle est égale à Sg2. Dans les modes de réalisation schématisés sur les figures 9 et 10, la tuyère a une section sensiblement carrée.

Comme précisé ci-avant, le pic de température est habituellement atteint dans la zone comprenant le deuxième garnissage, aussi bien dans le cas de la tuyère que dans le cas du venturi. On peut ainsi distinguer par exemple dans le cas de la tuyère deux formes de réalisation : la première dans laquelle la partie de plus faible section de la tuyère comprend sur toute sa longueur un ou plusieurs garnissages ayant des caractéristiques de dimensions, de surface des sections de passages et de longueurs telles que pour la réaction d'oxydation considérée le maximum de température soit atteint dans ladite partie et la deuxième dans laquelle la partie de plus faible section de la tuyère comprend sur toute sa longueur un ou plusieurs garnissages ayant des caractéristiques de dimensions, de surface des sections de passages et de longueurs telles que pour la réaction d'oxydation considérée le maximum de température soit atteint dans une des parties subséquentes deladite partie et donc ne soit pas atteint dans ladite partie.

Dans le cas du venturi, celui-ci comprend de préférence sur toute sa longueur un ou plusieurs garnissages ayant des caractéristiques de dimensions, de surface des sections de passages et de longueurs telles que pour la réaction d'oxydation considérée le maximum de température soit atteint en un point situé après le milieu du col dans le sens de circulation de la charge mise en réaction et de préférence en un point situé à une distance supérieure à 0,8 fois la longueur du col à partir du début de celui-ci dans le sens de circulation de la charge.

Ainsi, aussi bien dans le cas du venturi que dans celui de la tuyère, la zone centrale (4) dudit organe de réaction a une forme telle que, dans au moins une partie de ladite zone centrale, située à proximité de l'organe de mélange (3), la vitesse des gaz est plus élevée que dans au moins une partie subséquente de ladite zone centrale, située en amont, dans le sens de déplacement des gaz, de l'organe (5) d'évacuation des produits réactionnels.

Aussi bien dans le cas de la tuyère que dans celui du venturi, il peut être avantageux, suivant les caractéristiques de longueur et de surface de sections de passages des deux premiers garnissages, que pour la réaction d'oxydation considérée le maximum de température soit atteint à une distance de l'organe de mélange sensiblement au moins égale à 0,8 fois la valeur de la longueur Lg1. En effet, ce choix présente plusieurs avantages :
- le pic de température est en général repoussé relativement loin du mélangeur, surtout si la surface de la section globale de la zone de réaction est relativement faible et donc la vitesse des gaz relativement grande,
- au niveau du pic de température on aura ainsi une épaisseur du second garnissage formant un manchon (10), réalisé à l'aide d'un matériau réfractaire et isolant thermique, relativement importante, minimisant ainsi les pertes thermiques à ce niveau,
- enfin, la section de passage étant resserrée au niveau du pic de température, la capacité à emmagasiner de la chaleur sera réduite, les gaz emportant un maximum de celle-ci vers la suite du réacteur pour les réactions de retour à l'équilibre.

Globalement, l'utilisation du réacteur selon la présente invention est particulièrement avantageuse. Ainsi, dans le réacteur selon la présente invention lorsque l'on passe de la zone de mélange à la zone de réaction, on passe du point de vue de la cinétique des réactions d'oxydation d'une situation de blocage pratiquement complet de l'avancement des réactions d'oxydation, en particulier dans le cas des mélangeurs à poudre, puisque la poudre de granulométrie contrôlée a précisément ce rôle, à une situation d'avancement contrôlé de ces réactions. Ceci permet d'une part, par la présence de canaux même fins au début de l'organe de réaction, de limiter la perte de charge de l'ensemble, d'autre part, d'un point de vue cinétique, les réactions d'oxydation sont limitées voire totalement contrôlées par des effets de parois, ce qui est beaucoup moins le cas des réactions de retour à l'équilibre type vaporéformage thermique. On voit donc bien qu'il est possible, partiellement, de limiter les réactions d'oxydation exothermiques en multipliant notablement les effets de parois puisque la taille moyenne des canaux est plus faible et simultanément de laisser plus de temps aux réactions endothermiques de retour à l'équilibre. Ainsi, en terme d'espace libre, on passe d'une situation où la taille moyenne des espaces (en terme de surface moyenne de section de passage est habituellement de l'ordre de quelques dizaines de microns carrés à une situation où la taille moyenne des espaces est de l'ordre de quelques millimètres carrés. Le réacteur de la présente invention permet donc un contrôle des cinétiques des réactions d'oxydation dans la zone de réaction en ayant au début de cette zone des espaces libres de dimensions relativement faibles et en augmentant les dimensions de ces espaces tout au long de cette zone. Une telle réalisation permet d'obtenir ce que l'on pourrait appeler un "décoincement progressif" des cinétiques des réactions d'oxydation.

Habituellement, la dimension des divers passages dans la zone centrale de l'organe de réaction reste inférieure à environ 10⁻² mètre (m), cette dimension est le plus souvent d'environ 5x10⁻⁵ à environ 2x10⁻³ m et de préférence d'environ 10⁻⁴ à environ 10⁻³ m. En termes de surface de section, ces espaces auront ainsi une surface habituellement d'environ 0,0025 à environ 100 mm² et le plus souvent d'environ 0,01 à environ 4 mm².

Il est en outre tout à fait possible, pour éloigner au maximum le pic de température du mélangeur, de cumuler cette action de "décoincement progressif" avec un effet de vitesse en utilisant un organe de réaction dont la zone centrale a la forme globale d'une tuyère ou d'un venturi.

Les exemples suivants illustrent l'invention sans en limiter la portée.

### Exemple 1

On réalise selon la figure 2, un réacteur R vertical de forme tubulaire comportant une enveloppe extérieure 8 , métallique, supportant la pression, deux entrées 1 et 2 pour les gaz et une sortie 11 pour les effluents.

A l'intérieur de la dite enveloppe et sensiblement en son centre, on place un mélangeur de gaz entouré lui même d'une enveloppe métallique 13 étanche, cylindrique de 10⁻¹ m de hauteur et de 4x10⁻² m de diamètre (l'ensemble forme la zone de mélange 3). Ce mélangeur est formé par des disques 6 empilés les uns sur les autres comprenant des canaux croisés de type SULZER ; ces disques et l'espace libre les surmontant sont remplis de poudre d'alumine de granulométrie comprise entre 5x10⁻⁵ m et 10⁻⁴ m (50 à 100 µm (micromètre)).

Dans la zone de mélange à son extrémité supérieure, deux conduits permettent d'apporter les deux fluides (méthane + vapeur d'eau d'un côté par le conduit 1, air de l'autre par le conduit 2).

L'enveloppe cylindrique entourant le mélangeur est terminée par une trémie retenant la poudre d'alumine placée sur une grille (non représentées sur la figure 2) comportant 16 trous de 4x10⁻⁵ m de diamètre disposés à l'intérieur d'un carré central de 10⁻² m de côté.

Les gaz sortants du mélangeur pénètrent à travers la grille centrale dans la partie réactionnelle 4 qui est constituée par l'empilement de 50 pièces unitaires carrées en zircone mullite. Chaque pièce unitaire a 10⁻² m d'épaisseur, 4x10⁻² m de coté et comporte 841 trous carrés de 10⁻³ m de côté. Cette grille joue le rôle de l'organe d'éjection des gaz depuis l'organe de mélange dans l'organe de réaction monolithe.

L'enveloppe métallique 13 entourant le mélangeur et les pièces 7 de la partie réactionnelle 4 sont enserrées dans un manchon en fibre d'alumine de diamètre externe 14x10⁻² m. Ce manchon 10 en fibre est entouré d'un manchon 9 en béton réfractaire faisant la liaison avec la paroi métallique 8 formant l'enveloppe extérieure du réacteur R. Les fibres d'alumine utilisées pour fabriquer le manchon ont un diamètre moyen de 3x10⁻⁶ m et une longueur moyenne de 150x10⁻⁶ m. La densité apparente du manchon mesurée après 10 heures de fonctionnement du réacteur est de 0,3 et la dimension moyenne des espaces interfibres est de 6x10⁻⁶ m.

Dans le réacteur tel que décrit ci-avant et fonctionnant sous 4 MPa, on introduit par la ligne 1 du méthane et de la vapeur d'eau, et par la ligne 2 de l'air en proportions telles que le mélange de gaz a la composition molaire suivante :
- CH₄: = 450
- H₂O: = 900
- O₂: = 290
- N₂: = 1130

La température du mélange gazeux à l'entrée de la zone de mélange est de 400 °C. A la sortie 11 du réacteur, on récupère un gaz à une température de 855 °C, dont la composition molaire est, après condensation de l'eau, la suivante :
- CH₄: = 28
- N₂: = 1 330
- O₂: = 0
- H₂: = 875
- CO: = 233
- CO₂: = 189

Aprés 5 heures de fonctionnement les conditions thermiques sont stabilisées et la réaction a pu être effectuée durant 300 heures sans aucun problème. Le différentiel de perte de charge mesuré après 5 heures de fonctionnement est de 0,1 MPa. Au cours de ce fonctionnement, la température de la paroi métallique du réacteur mesurée sur sa face externe n'a pas dépassée 150 °C. Après arrêt du test et démontage des divers éléments formant le réacteur, on n'a pas constaté de fissures dans la couche de béton, ni aucune détérioration ni du manchon fibreux ni des diverses pièces en céramique. Par ailleurs, au cours de ce test, on a pu mesurer une teneur en coke égale à environ 10 milligrammes de coke par mètre cube de gaz (ramené à température et pression normales) à la sortie 11 du réacteur.

### Exemple 2

Le réacteur est celui de l'exemple 1, sauf que les gaz sortant de l'organe de mélange pénètrent à travers la grille centrale dans la partie réactionnelle 4 (figure 5) qui est constituée par l'empilement de 50 pièces unitaires carrées en zircone mullite de section variable, mais de même épaisseur égale à 10⁻² m. On rencontre d'abord un empilement de 12 pièces de 10⁻² m de côté comportant 49 trous carrés de 10⁻³ m de côté, puis 10 pièces de section variable allant de 1,2 à 4,8 x10⁻² m de côté avec un pas de 0,4 x10⁻² m, puis 28 pièces de 5x10⁻² m de côté comportant 1296 trous carrés de 10⁻³ m de côté.

La composition du gaz introduit est identique à celle de l'exemple 1. La température du mélange gazeux à l'entrée de l'organe de mélange est de 450°C. A la sortie 11 du réacteur, on récupère un gaz à une température de 870°C, dont la composition molaire est, après condensation de l'eau, la suivante :
- CH₄: = 19
- N₂: = 1130
- O₂: = 0
- H₂: = 894
- CO: = 248
- CO₂: = 182

Après 5 heures de fonctionnement, les conditions thermiques sont stabilisées et la réaction a pu être effectuée durant 450 heures sans aucun problème. Le différentiel de perte de charge mesuré après 5 heures de fonctionnement est de 0,1 MPa. Au cours de ce fonctionnement, la température de la paroi métallique du réacteur mesurée sur sa face externe n'a pas dépassé 150°C. Après arrêt du test et démontage des divers éléments formant le réacteur, on n'a pas constaté de fissures dans la couche de béton, ni aucune détérioration ni du manchon fibreux ni des diverses pièces en céramique. Par ailleurs, au cours de ce test, on a pu mesurer une teneur en coke égale à environ 8 milligrammes de coke par mètre cube de gaz (ramené à température et pression normales) à la sortie 11 du réacteur. Ces résultats montrent que l'on peut, sans problème majeur, travailler avec des gaz ayant une température d'entrée plus élevée et obtenir une meilleure conversion avec une diminution de la formation du coke par rapport à ce que l'on avait obtenu avec le réacteur selon l'exemple 1.

### Exemple 3

Le réacteur est identique à celui de l'exemple 2, sauf que les gaz sortant de l'organe de mélange pénètrent à travers la grille centrale dans la partie réactionnelle 4 (figure 9) qui est constituée par l'empilement de 50 pièces unitaires carrées en zircone mullite de section globale de surface variable, mais de même épaisseur égale à 10⁻² m . On rencontre d'abord un empilement de 12 pièces de 10⁻² m de côté comportant 100 trous carrés de 0,25x10⁻³ m de côté, puis 10 pièces de dimensions globales variables allant de 1,2 à 4,8x10⁻² m de côté avec un pas de 0,4x10⁻² m comportant un nombre croissant de trous, proportionnellement aux dimensions globales, lesdits trous ayant 0,5x10⁻³ m de côté, puis 28 pièces de 5x10⁻² m de côté comportant 1296 trous carrés de 10⁻³ m de côté.

La composition du gaz introduit est identique à celle de l'exemple 1.
Le débit total des gaz aux conditions d'entrée dans le réacteur est de 4,1 m ³ · h ⁻¹ (mètre cube par heure). Dans ces conditions, la vitesse des gaz calculée (en tenant compte du débit et de la surface totale de passage) au niveau de l'entée des gaz dans la zone centrale de l'organe de réaction est de 23,3 mxs ⁻¹ (mètre par seconde) et les gaz ont sensiblement la même vitesse à l'extrêmité du col de tuyère. La vitesse des gaz calculée au niveau de la sortie de la zone centrale de l'organe de réaction est de 1,4 m · s ⁻¹.

La température du mélange gazeux à l'entrée de l'organe de mélange est de 480°C. A la sortie 11 du réacteur, on récupère un gaz à une température de 890°C, dont la composition molaire est, après condensation de l'eau, la suivante :
- CH₄ =: 15
- N₂: = 1130
- O₂: = 0
- H₂: = 903
- CO: = 256
- CO₂: = 179

Après 5 heures de fonctionnement, les conditions thermiques sont stabilisées et la réaction a pu être effectuée durant 600 heures sans aucun problème. Le différentiel de perte de charge mesuré après 5 heures de fonctionnement est de 0,1 MPa. Au cours de ce fonctionnement, la température de la paroi métallique du réacteur mesurée sur sa face externe n'a pas dépassée 150°C. Après arrêt du test et démontage des divers éléments formant le réacteur, on n'a pas constaté de fissures dans la couche de béton, ni aucune détérioration, ni du manchon fibreux, ni des diverses pièces en céramique. Par ailleurs, au cours de ce test, on a pu mesurer une teneur en coke égale à environ 8 milligrammes de coke par mètre cube de gaz (ramené à température et pression normales) à la sortie 11 du réacteur. Ces résultats montrent que l'on peut, sans problème majeur, travailler avec des gaz ayant une température d'entrée plus élevée et obtenir une meilleure conversion avec une diminution de la formation du coke par rapport à ce que l'on avait obtenu avec le réacteur selon l'exemple 1.

## Revendications

1. Réacteur d'oxydation (R) de forme allongée comprenant en combinaison :
- au moins un organe de mélange (3) comportant des moyens d'alimentation (2) en gaz oxydant et des moyens d'alimentation (1) en charge oxydable,
- au moins un organe de réaction (4), faisant suite audit organe de mélange et situé à une distance de celui-ci au plus égale à la distance de coincement de la flamme, et
- au moins un organe d'évacuation (5) des produits réactionnels connecté audit organe de réaction
l'organe de réaction comprenant une zone centrale comportant sur au moins une partie de sa section au moins un premier garnissage adapté à définir une multiplicité d'espaces présentant des passages ayant suivant au moins une direction une dimension au plus égale à la distance de coincement de la flamme pouvant résulter de l'oxydation de ladite charge, le réacteur d'oxydation étant caractérisé en ce qu'il renferme au moins une zone périphérique comportant sur au moins une partie de sa section au moins un second garnissage constitué de fibres céramiques formant un manchon (10) entourant ledit premier garnissage,ledit manchon ayant une porosité représentant au moins 50 % de son volume et étant adapté à définir une multiplicité d'espaces présentant des passages ayant suivant au moins une direction une dimension de 2 à 1000 fois plus petite que la dimension des passages de la zone centrale, de sorte que la perte de charge dudit second garnissage est supérieure à celle dudit premier garnissage.

2. Réacteur selon la revendication 1 dans lequel la dimension des passages de la zone périphérique est de 5 à 100 fois plus petite que celle des passages de la zone centrale.

3. Réacteur selon la revendication 1 ou 2 dans lequel le garnissage de la zone centrale comporte sur au moins une partie de sa section, au moins un monolithe comportant une pluralité de canaux juxtaposés, d'axes sensiblement parallèles entre eux et sensiblement parallèles à l'axe du réacteur, ayant, suivant au moins une direction, une dimension au plus égale à la distance de coincement de la flamme pouvant résulter de l'oxydation de ladite charge.

4. Réacteur selon l'une des revendications 1 à 3 dans lequel ledit second garnissage, est constituée de pores ou espaces ayant une dimension de 5X10⁻⁸m à environ 5X10⁻⁵m.

5. Réacteur selon la revendication 3 ou 4 dans lequel le garnissage de la zone centrale comporte sur au moins une partie de sa section, au moins un monolithe en matière céramique dure.

6. Réacteur selon l'une des revendications 3 à 5 dans lequel le garnissage de la zone centrale est formé par la superposition, et éventuellement la juxtaposition, d'une pluralité de monolithes, la distance entre chaque monolithe adjacent étant inférieure, aussi bien dans le sens vertical que dans le plan horizontal dans le cas de la juxtaposition de plusieurs monolithes, à la distance de coincement de la flamme.

7. Réacteur selon l'une des revendications 3 à 6 dans lequel la zone centrale comprend dans au moins une partie de son volume un catalyseur.

8. Réacteur selon la revendication 7 dans lequel le catalyseur est supporté par les parois des canaux d'au moins un monolithe.

9. Réacteur selon l'une des revendications 1 à 8 dans lequel le manchon entourant ledit premier garnissage s'étend sur toute la longueur de l'organe de réaction.

10. Réacteur selon l'une des revendications 1 à 9 dans lequel le manchon entourant ledit premier garnissage s'étend sur toute la longueur de l'organe de réaction et de l'organe de mélange.

11. Réacteur selon l'une des revendications 1 à 10 dans lequel le manchon entourant ledit premier garnissage est divisé en au moins deux tronçons de longueur égale ou inégale raccordé entre eux de manière à ce que la distance maximum entre eux soit au plus égale à 0,5 fois la distance de coincement de la flamme.

12. Réacteur d'oxydation selon l'une des revendications 1 à 11 caractérisé en ce que l'organe de réaction comprend une première partie, côté organe de mélange, dont la zone centrale a une section de surface inférieure à la surface de la section d'au moins une deuxième partie de ladite zone centrale, subséquente de ladite première partie, côté organe d'évacuation.

13. Réacteur selon la revendication 12 dans lequel la zone centrale de l'organe de réaction a la forme d'une tuyère dont la surface de la section est plus faible à proximité de l'organe de mélange qu'à proximité de l'organe d'évacuation.

14. Réacteur selon la revendication 12 ou 13 dans lequel la zone centrale de l'organe de réaction a, à proximité de l'organe de mélange, la forme d'une tuyère dont la section a, au niveau de son raccordement à l'organe de mélange (3) et sur une longueur L1, une surface S1 inférieure ou égale à environ la surface S de la section de l'organe de mélange au niveau dudit raccordement, puis sur une longueur L2 la surface de la section augmente, de façon sensiblement régulière, jusqu'à une valeur S2 égale à environ 1,5 à 500 fois S1 et est ensuite maintenue sensiblement constante sur une longueur L3, la somme L des longueurs L1, L2 et L3 étant sensiblement égale à la longueur de ladite zone centrale.

15. Réacteur selon la revendication 14 dans lequel la longueur L1 est telle que pour la réaction d'oxydation considérée le maximum de température soit atteint à une distance de l'organe de mélange au moins sensiblement égale à 0,5 fois la valeur de cette longueur L1 et la longueur L2 est telle que l'angle alpha de la tuyère soit d'environ 15 à environ 120 degrés d'angle.

16. Réacteur selon la revendication 14 ou 15 dans lequel la longueur L1 est telle que pour la réaction d'oxydation considérée le maximum de température soit atteint à une distance de l'organe de mélange sensiblement comprise entre 0,8 fois et 1 fois la valeur de cette longueur L1.

17. Réacteur selon la revendication 12 dans lequel la zone centrale de l'organe de réaction a, à proximité de l'organe de mélange, la forme d'un venturi comprenant un convergent et un divergent séparés par un col, et ayant une section au niveau de son raccordement à l'organe de mélange de surface sensiblement égale à celle dudit organe au niveau dudit raccordement, une section au niveau du col de surface inférieure à celle de l'organe de mélange au niveau de son raccordement audit venturi et une section à l'extrémité du divergent dont la surface est supérieure à celle dudit col.

18. Réacteur selon la revendication 17 dans lequel le venturi a, à partir de son raccordement à l'organe de mélange jusqu'à l'extrémité du col relié au divergent, une longueur L1 telle que pour la réaction d'oxydation considérée le maximum de température soit atteint à une distance de l'organe de mélange au moins sensiblement égale à 0,5 fois la valeur de cette longueur L1, l'angle bêta du convergent est d'environ 30 à environ 120 degrés d'angle et l'angle gamma du divergent est d'environ 15 à environ 120 degrés d'angle.

19. Réacteur d'oxydation selon l'une des revendications 1 à 11 dont la zone centrale de l'organe de réaction comprend s parties successives caractérisé en ce que la première partie, côté organe de mélange, comporte un garnissage adapté à définir une multiplicité d'espaces présentant des passages dont la section a une surface S1, lesdits passages ayant suivant au moins une direction une dimension au plus égale à la distance de coincement de la flamme pouvant résulter de l'oxydation de ladite charge, et dont la dernière partie, côté organe d'évacuation, comporte un garnissage adapté à définir une multiplicité d'espaces présentant des passages dont la section a une surface Ss supérieure à S1, lesdits passages ayant suivant au moins une direction une dimension au plus égale à la distance de coincement de la flamme pouvant résulter de l'oxydation de ladite charge, s est un nombre entier positif supérieur ou égal à 2.

20. Réacteur selon la revendication 19 dans lequel la zone centrale de l'organe de réaction comprend s parties successives comportant chacune un gamissage adapté à définir une multiplicité d'espaces présentant des passages dont la section a une surface croissante, d'une partie à la suivante, depuis la première partie jusqu'à la dernière partie.

21. Réacteur selon la revendication 19 ou 20 dans lequel la zone centrale de l'organe de réaction comprend trois parties successives.

22. Réacteur selon la revendication 21 dans lequel la première partie, côté organe de mélange, comporte sur une longueur L1 un garnissage adapté à définir des passages dont la section a une surface S1, la deuxième partie, subséquente de ladite première partie, comporte sur une longueur L2 un garnissage adapté à définir des passages dont la section a une surface S2 et la troisième et dernière partie, côté organe d'évacuation, comporte sur une longueur L3 un garnissage adapté à définir des passages dont la section a une surface S3, lesdites surfaces S1, S2 et S3 étant telles que le rapport S3 : S1 soit d'environ 100 : 1 à environ 4 : 1, et le rapport S2 : S1 soit d'environ 50 : 1 à environ 1,2 : 1.

23. Réacteur selon la revendication 22 dans lequel la longueur L1 et et la surface S1 sont telles que pour la réaction d'oxydation considérée le maximum de température soit atteint à une distance de l'organe de mélange au moins sensiblement égale à la valeur de la longueur L1.

24. Réacteur selon la revendication 22 ou 23 dans lequel les longueurs L1 et L2 et les surfaces S1 et S2 sont telles que pour la réaction d'oxydation considérée le maximum de température soit atteint à une distance de l'organe de mélange sensiblement comprise entre la valeur de la longueur L1 et la valeur de la somme des longueurs L1 + L2.

25. Réacteur selon l'une des revendications 19 à 24 dans lequel la zone centrale de l'organe de réaction a sur toute sa longueur une section globale de surface et de forme sensiblement constante.

26. Réacteur selon l'une des revendications 19 à 24 dans lequel la zone centrale de l'organe de réaction a la forme d'une tuyère dont la surface de la section globale est plus faible à proximité de l'organe de mélange qu'à proximité de l'organe d'évacuation.

27. Réacteur selon la revendication 26 dans lequel la partie de section globale de plus faible surface de la tuyère comprend sur toute sa longueur un ou plusieurs garnissages ayant des caractéristiques de dimensions de surface des sections des passages et de longueurs telles que pour la réaction d'oxydation considérée le maximum de température soit atteint dans ladite partie.

28. Réacteur selon la revendication 26 dans lequel la partie de section globale de plus faible surface de la tuyère comprend sur toute sa longueur un ou plusieurs garnissages ayant des caractéristiques de dimensions de surface des sections des passages et de longueurs telles que pour la réaction d'oxydation considérée le maximum de température soit atteint dans une des parties subséquentes deladite partie.

29. Réacteur selon l'une des revendications 19 à 24 dans lequel la zone centrale de l'organe de réaction a, à proximité de l'organe de mélange, la forme d'un venturi comprenant un convergent et un divergent séparés par un col, et ayant, au niveau de son raccordement à l'organe de mélange, une section globale de surface sensiblement égale à celle dudit organe au niveau dudit raccordement, une section globale au niveau du col de surface sensiblement inférieure à celle de l'organe de mélange au niveau de son raccordement audit venturi et une section globale à l'extrémité du divergent dont la surface est supérieure à celle dudit col.

30. Réacteur selon la revendication 29 dans lequel le venturi comprend sur toute sa longueur un ou plusieurs garnissages ayant des caractéristiques de dimensions, de surface des sections des passages et de longueurs telles que pour la réaction d'oxydation considérée le maximum de température soit atteint en un point situé après le milieu du col dans le sens de circulation des fluides mis en réaction.

31. Utilisation d'un réacteur selon l'une des revendications 1 à 30 dans un procédé d'oxydation d'une charge oxydable en phase gazeuse par un gaz oxydant ou un mélange de gaz comprenant au moins un gaz oxydant, caractérisée en ce qu'on introduit la charge oxydable et le gaz oxydant dans un organe de mélange, on fait circuler le mélange gazeux issu de l'organe de mélange dans un organe de réaction comportant une zone centrale et une zone périphérique, on établit une perte de charge ΔP₁ dans la zone centrale et une perte de charge ΔP₂ dans la zone périphérique, ces pertes de charge étant telles que l'on fait réagir sensiblement tout le mélange gazeux issu de l'organe de mélange dans ladite zone centrale de l'organe réactionnel et que le différentiel de perte de charge ΔP₂-ΔP₁ soit positif, et on récupère les produits réactionnels formés.

32. Utilisation selon la revendication 31 dans lequel le différentiel de perte de charge est de 10 Pascals à 0,5 Mpa et de préférence de 100 Pascals à 0,4 MPa.

33. Utilisation selon la revendication 31 ou 32 caractérisé en ce que dans au moins une première partie de la zone centrale de la zone de réaction, côté zone de mélange, on fait circuler le mélange gazeux à une vitesse V1 et en ce que dans au moins une autre partie subséquente de ladite première partie, côté zone d'évacuation des produits réactionnels, on fait circuler ledit mélange gazeux issu de ladite première partie à une vitesse Vf inférieure à ladite vitesse V1.

34. Utilisation selon la revendication 33 dans lequel la vitesse V1 est d'environ 2 à environ 300 m·s⁻¹ et la vitesse Vf est d'environ 0,05 à environ 250 m·s⁻¹.

35. Utilisation selon la revendication 33 ou 34 dans lequel le rapport des vitesses V1 : Vf est d'environ 2 : 1 à environ 50 : 1.

36. Utilisation selon l'une des revendications 33 à 35 dans lequel on fait circuler le mélange gazeux dans la zone centrale de la zone de réaction dans des conditions telles que pour la réaction d'oxydation considérée le maximum de température soit atteint dans la zone de vitesse maximum en un point situé entre le milieu de ladite zone et son extrémité située du côté de la zone d'évacuation.

37. Utilisation selon l'une des revendications 31 à 36 pour l'oxydation ménagée d'une charge d'hydrocarbures par un mélange de gaz comprenant de l'oxygène en vue de produire un mélange de gaz utilisable pour la synthèse de l'ammoniac ou la synthèse d'alcools, comprenant de l'hydrogène et du monoxyde de carbone.

## Patentansprüche

1. Oxidationsreaktor (R) länglicher Form, in Kombination umfassend:
- wenigstens ein Mischorgan (3), das Speisemittel (2) mit oxidierendem Gas und Mittel zur Speisung (1) mit oxidierbarer Charge umfaßt,
- wenigstens ein Reaktionsorgan (4), das sich an das Mischorgan anschließt und unter einem Abstand hiervon angordnet ist, der höchstens gleich dem Abstand der Flammeneinschnürung ist und
- wenigstens ein Abzugsorgan (5) für die Reaktionsprodukte, das mit diesem Reaktionsorgan verbunden ist,
wobei das Reaktionsorgan eine mittige Zone umfaßt, die auf wenigstens einem Teil ihres Querschnitts wenigstens eine erste Auskleidung umfaßt, die so ausgelegt ist, daß sie eine Vielzahl von Räumen definiert, welche Durchlässe bilden, die in wenigstens einer Richtung einer Abmessung höchstens gleich der Einschnürungsentfernung der Flamme aufweisen, die aus der Oxidation dieser Charge resultieren kann, wobei der Oxidationsreaktor dadurch gekennzeichnet ist, daß er wenigstens eine Umfangszone einschließt, die auf wenigstens einem Teil ihres Querschnitts wenigstens eine Auskleidung umfaßt, die aus keramischen Fasern besteht, die eine Hülse (10) bilden, die diese erste Auskleidung umschließt, wobei die Hülse eine Porosität hat, welche wenigstens 50% ihres Volumens darstellt und so ausgelegt ist, daß sie eine Vielzahl von Räumen definiert, die Durchlässe haben, die längs wenigstens einer Richtung einer Abmessung haben, die zwei bis eintausendmal kleiner als die Abmessung der Durchlässe der mittigen Zone ist, derart, daß der Druckverlust dieser zweiten Auskleidung größer als die dieser ersten Auskleidung ist.

2. Reaktor nach Anspruch 1, dadurch gekennzeichnet, daß die Abmessung der Durchlässe der Umfangszonen 5 bis 100 **mal** kleiner als die der Durchlässe der mittigen Zone ist.

3. Reaktor nach Anspruch 1 oder 2, bei dem die Auskleidung der mittigen Zone auf wenigstens einem Teil ihres Querschnitts wenigstens einen Monolithen umfaßt, der eine Vielzahl von nebeneinander angeordneten Kanälen von Achsen im wesentlichen parallel untereinander und im wesentlichen parallel zur Achse des Reaktors umfaßt, der in wenigstens einer Richtung eine Abmessung hat, die höchstens gleich der Einschnürungsentfernung der Flamme ist, die aus der Oxidation dieser Charge resultieren kann.

4. Reaktor nach einem der Ansprüche 1 bis 3, bei dem diese zweite Auskleidung gebildet wird aus Poren oder Räumen mit einer Abmessung von 5 x 10⁻⁸ m bis etwa 5 x 10⁻⁵ m.

5. Reaktor nach Anspruch 3 oder 4, bei dem die Auskleidung der mittigen Zone auf wenigstens einem Teil ihres Querschnitts wenigstens einen Monolithen aus hartem keramischem Material umfaßt.

6. Reaktor nach einem der Ansprüche 3 bis 5, bei dem die Auskleidung der mittigen Zone gebildet wird, durch die Überlagerung und ggfs. die Nebeneinanderanordnung einer Vielzahl von Monolithen, wobei die Entfernung zwischen jedem benachbarten Monolith kleiner sowohl in vertikaler Richtung wie in der Horizontalebene im Fall der Nebeneinanderanordnung mehrerer Monolithen als die Einschnürungsentfernung der Flamme ist.

7. Reaktor nach einem der Ansprüche 3 bis 6, bei dem die mittige Zone in wenigstens einem Teil ihres Volumens einen Katalysator umfaßt.

8. Reaktor nach Anspruch 7, bei dem der Katalysator durch die Wände der Kanäle wenigstens eines Monolithen getragen ist.

9. Reaktor nach einem der Ansprüche 1 bis 8, bei dem die die erste Auskleidung umschließende Hülse über die gesamte Länge des Reaktionsorgans sich erstreckt.

10. Reaktor nach einem der Ansprüche 1 bis 9, bei dem die die erste Auskleidung umschließende Hülse sich über die gesamte Länge des Reaktionsorgans und des Mischorgans erstreckt.

11. Reaktor nach einem der Ansprüche 1 bis 10, bei dem die die erste Auskleidung umschließende Hülse in wenigstens zwei Abschnitte gleicher oder ungleicher Länge unterteilt ist, die untereinander derart verbunden sind, daß die maximale Entfernung zwischen ihnen höchstens gleich der 0,5-fachen Entfernung der Flammeneinschnürung ist.

12. Oxidationsreaktor nach einem der Ansprüche 1 bis 11, dadurch gekennzeichnet, daß das Reaktionsorgan einen ersten Teil auf der Seite des Mischorgans umfaßt, dessen mittige Zone einen Flächenquerschnitt kleiner als die Fläche des Querschnitts wenigstens eines zweiten Teils dieser mittigen Zone ist, die sich an diesen ersten Teil auf der Seite des Abzugsorgans anschließt.

13. Reaktor nach Anspruch 12, bei dem die mittige Zone des Reaktionsorgans die Form einer Düse hat, deren Querschnittsfläche geringer benachbart dem Mischorgan als in der Nähe des Abzugsorgans ist.

14. Reaktor nach Anspruch 12 oder 13, bei dem die mittige Zone des Reaktionsorgans, benachbart dem Mischorgan, die Form einer Düse hat, deren Querschnitt in Höhe ihrer Verbindung mit dem Mischorgan (3) und über eine Länge L1 eine Fläche S1 hat, die kleiner oder gleich etwa der Fläche S des Querschnitts des Mischorgans in Höhe dieser Verbindung ist, dann über eine Länge L2 die Querschnittsfläche in im wesentlichen regelmäßiger Weise bis auf einen Wert S2 gleich etwa dem 1,5- bis 500-fachen S1 zunimmt und dann im wesentlichen konstant über eine Länge L3 gehalten wird, wobei die Summe L der Längen L1 und L2 und L3 im wesentlichen gleich der Länge dieser mittigen Zone ist.

15. Reaktor nach Anspruch 14, bei dem die Länge L1 derart ist, daß für die betrachtete Oxidationsreaktion das Temperaturmaximum bei einer Entfernung des Mischorgans erreicht ist, die wenigstens im wesentlichen gleich dem 0,5-fachen dieser Länge L1 ist und die Länge L2 derart ist, daß der Winkel Alpha der Düse in etwa 15 bis etwa 120 Winkelgrad ausmacht.

16. Reaktor nach Anspruch 14 oder 15, bei dem die Länge L1 derart ist, daß für die betrachtete Oxidationsreaktion das Temperaturmaximum bei einer Entfernung des Mischorgans erreicht ist, die im wesentlichen zwischen dem 0,8-fachen und dem 1-fachen des Werts dieser Länge L1 liegt.

17. Reaktor nach Anspruch 12, bei dem die mittige Zone des Reaktionsorgans benachbart dem Mischorgan die Gestalt eines Venturis, das einen konvergenten Teil und einen divergenten Teil, getrennt durch einen Hals hat, aufweist, und über einen Querschnitt in Höhe seiner Verbindung mit dem Mischorgan von einer Fläche im wesentlichen gleich diesem Organ in Höhe dieses Verbindungsorgans verfügt, über einen Querschnitt in Höhe des Halses von einer Fläche kleiner als der des Mischorgans in Höhe seiner Verbindung mit diesem Venturi verfügt und über einen Querschnitt am Ende des divergenten Teils, dessen Fläche größer als die dieses Halses ist.

18. Reaktor nach Anspruch 17, bei dem das Venturi ausgehend von seiner Verbindung mit dem Mischorgan bis zum Ende des mit dem divergenten Teil verbundenen Halses eine Länge L1 derart aufweist, daß für die betrachtete Oxidationsreaktion das Maximum an Temperaturmaximum erreicht ist, bei einer Entfernung des Mischorgans, die wenigstens im wesentlichen gleich dem 0,5-fachen des Werts dieser Länge L1 ist, wobei der Winkel Beta des konvergenten Teils etwa 30 bis etwa 120 Winkelgrad und der Winkel Gamma des divergenten Teils etwa 15 bis 120 Winkelgrad ausmacht.

19. Oxidationsreaktor nach einem der Ansprüche 1 bis 11, dessen mittige Zone des Reaktionsorgans s aufeinanderfolgende Teile umfaßt, dadurch gekennzeichnet, daß der erste Teil auf der Seite des Mischorgans eine Auskleidung umfaßt, die so ausgelegt ist, daß sie eine Vielzahl von Räumen definiert, die Durchlässe darstellen, deren Querschnitt eine Fläche S1 hat, wobei die Durchlässe längs wenigstens einer Richtung eine Abmessung haben, die höchstens gleich der Entfernung der Flammeneinschnürung ist, die aus der Oxidation dieser Charge resultieren kann und deren letzter Teil auf der Seite des Abzugsorgans eine Auskleidung aufweist, die so ausgebildet ist, daß sie eine Vielzahl von Räumen definiert, welche Durchlässe bilden, deren Querschnitt eine Oberfläche Ss hat, die größer S1 ist, wobei die Durchlässe längs wenigstens einer Richtung eine Abmessung haben, die höchstens gleich der Einschnürentfernung der Flamme ist, die aus der Oxidation dieser Charge resultieren kann, wobei s eine ganze positive Zahl größer oder gleich 2 ist.

20. Reaktor nach Anspruch 19, bei dem die mittige Zone des Reaktionsorgans s aufeinanderfolgende Teile umfaßt, die je eine Auskleidung umfassen, die so ausgelegt ist, daß sie eine Vielzahl von Räumen definiert, welche Durchlässe aufweisen, deren Querschnitt eine zunehmende Fläche von einem Teil zum folgenden, ausgehend vom ersten Teil bis zum letzten Teil hat.

21. Reaktor nach Anspruch 19 oder 20, bei dem die mittige Zone des Reaktionsorgans drei aufeinander folgende Teile umfaßt.

22. Reaktor nach Anspruch 21, bei dem der mittige Teil auf der Seite des Mischorgans über eine Länge L1 eine Auskleidung aufweist, die so ausgelegt ist, daß sie Durchlässe definiert, deren Querschnitt eine Fläche S1 hat, wobei der zweite Teil anschließend an diesen ersten Teil über eine Länge L2 eine Auskleidung umfaßt, die so ausgelegt ist, daß sie Durchlässe definiert, deren Querschnitt eine Fläche S2 hat und wobei der dritte und letzte Teil auf der Seite des Abzugsorgans über eine Länge L3 eine Auskleidung aufweist, die so ausgebildet ist, daß sie Durchlässe definiert, deren Querschnitt eine Fläche S3 hat, wobei die Flächen S1, S2 und S3 derart sind, daß das Verhältnis S3:S1 etwa 100:1 bis 4:1 ist und das Verhältnis S2:S1 etwa 50:1 bis 1,2:1 beträgt.

23. Reaktor nach Anspruch 22, bei dem die Länge L1 und die Fläche S1 derart sind, daß für die betrachtete Oxidationsreaktion das Temperaturmaximum bei einer Entfernung des Mischorgans erreicht ist, die wenigstens im wesentlichen gleich dem Wert der Länge L1 ist.

24. Reaktor nach Anspruch 22 oder 23, bei dem die Längen L1 und L2 und die Flächen S1 und S2 derart sind, daß für die betrachtete Oxidationsreaktion das Temperaturmaximum erreicht wird bei einer Entfernung des Mischorgans, die im wesentlichen zwischen dem Wert der Länge L1 und dem Wert der Summe der Längen L1 + L2 liegt.

25. Reaktor nach einem der Ansprüche 19 bis 24, bei dem die mittige Zone des Reaktionsorgans über eine gesamte Länge einen Gesamtflächenquerschnitt im wesentlichen konstanter Form hat.

26. Reaktor nach einem der Ansprüche 19 bis 24, bei dem die mittige Zone des Reaktionsorgans die Form einer Düse hat, deren Gesamtquerschnittsfläche geringer benachbart dem Mischorgan als benachbart dem Abzugsorgan ist.

27. Reaktor nach Anspruch 26, bei dem der geringere Gesamtflächenquerschnitt der Düse über seine Länge eine oder mehrere Auskleidungen mit Charakteristiken von Oberflächenabmessungen der Querschnitte der Durchlässe sowie der Längen derart umfaßt, daß für die betrachtete Oxidationsreaktion das Temperaturmaximum in diesem Teil erreicht wird.

28. Reaktor nach Anspruch 26, bei dem der geringere Gesamtflächenquerschnitt der Düse über die Gesamtlänge einer oder mehrerer Auskleidungen mit Charakteristiken von Oberflächenabmessungen der Querschnitte der Durchlässe und von Längen derart umfaßt, daß für die betrachtete Oxidationsreaktions das Temperaturmaximum in einem der nachfolgenden Teile dieses Teils erreicht wird.

29. Reaktor nach einem der Ansprüche 19 bis 24, bei dem die mittige Zone des Reaktionsorgans benachbart dem Mischorgan die Form eines Venturis hat, das einen durch einen Hals getrennten konvergenten Teil und einen divergenten Teil aufweist und in Höhe seiner Verbindung mit dem Mischorgan einen Globalquerschnitt von einer Fläche im wesentlichen gleich der dieses Mischorgans in Höhe dieser Verbindung hat, einen Globalquerschnitt in Höhe des Flächenhalses hat, der im wesentlichen kleiner als der des Mischorgans in Höhe seiner Verbindung mit diesem Venturi ist, und einen Gesamtquerschnitt am Ende des divergenten Teils hat, dessen Fläche größer als die des Halses ist.

30. Reaktor nach Anspruch 29, bei dem das Venturirohr über seine gesamte Länge eine oder mehrere Auskleidungen mit Charakteristiken von Oberflächenabmessungen der Querschnitte der Durchlässe und von Längen derart umfaßt, daß für die betrachtete Oxidationsreaktion das Temperaturmaximum an einer Stelle erreicht wird, die nach der Mitte des Halses in Zirkulationsrichtung der in Reaktion versetzten Fluide erreicht ist.

31. Verwendung eines Reaktors nach einem der Ansprüche 1 bis 30 bei einem Oxidationsverfahren einer oxidierbaren Charge in gasförmiger Phase durch ein oxidierbares Gas oder ein Gasgemisch, das wenigstens ein oxidierendes Gas umfaßt, dadurch gekennzeichnet, daß man die oxidierbare Charge und das oxidierende Gas in ein Mischorgan einführt, das gasförmige, aus dem Mischorgan stammende Gemisch in ein Reaktionsorgan einführt, das eine mittige Zone und eine Umfangszone umfaßt, einen Druckverlust Δ P1 in der mittigen Zone sowie einen Druckverlust Δ P2 in der Umfangszone herstellt, wobei diese Druckverluste derart sind, daß man im wesentlichen das gesamte gasförmige Gemisch, das aus dem Mischorgan stammt, in dieser mittigen Zone des Reaktionsorgans reagieren läßt und daß das Druckverlustdifferential Δ P2 - Δ P1 positiv ist und man die gebildeten Reaktionsprodukte gewinnt.

32. Verwendung nach Anspruch 31, bei der das Druckverlustdifferential 10 Pascal bis 0,5 Mpa und vorzugsweise 100 Pascal bis 0,4 Mpa ausmacht.

33. Verwendung nach Anspruch 31 oder 32, dadurch gekennzeichnet, daß in wenigstens einem ersten Teil der mittigen Zone der Reaktionszone auf der Seite der Mischzone man das gasförmige Gemisch bei einer Geschwindigkeit V1 zirkulieren läßt und daß in wenigstens einem anderen, auf den ersten Teil folgenden Teil, auf der Seite der Abzugszone der Reaktionsprodukte man dieses gasförmige aus dieser ersten Zone stammende Gemisch bei einer Geschwindigkeit Vf kleiner als die Geschwindigkeit V1 zirkulieren läßt.

34. Verwendung nach Anspruch 33, bei der die Geschwindigkeit V1 etwa 2 bis etwa 300 m.s⁻¹ ist und die Geschwindigkeit Vf etwa 0,05 bis etwa 250 m·s⁻¹ ausmacht.

35. Verwendung nach Anspruch 33 oder 34, bei der das Verhältnis der Geschwindigkeiten V1:Vf etwa 2:1 bis etwa 50:1 ist.

36. Verwendung nach einem der Ansprüche 33 bis 35, bei der man das gasförmige Gemisch in der mittigen Zone der Reaktionszone unter Bedingungen derart zirkulieren läßt, daß für die betrachtete Oxidationsreaktion das Temperaturmaximum in der Zone maximaler Geschwindigkeit an einer Stelle erreicht wird, die sich zwischen der Mitte dieser Zone und ihrem Ende auf der Seite der Abzugszone befindet.

37. Verwendung nach einem der Ansprüche 31 bis 36 für die Oxidation einer Kohlenwasserstoffcharge durch ein Gasgemisch, das Sauerstoff umfaßt, um ein Gasgemisch zu erzeugen, das für die Synthese von Ammoniak oder die Synthese von Alkoholen, Wasserstoff und Kohlenmonoxyd umfassend, verwendbar ist.

## Claims

1. An oxidation reactor R of elongated shape conprising in combination:
- at least one mixing member (3) comprising means (2) for feeding oxidising gag and means (1) for feeding oxidisable charge,
- at least one reaction member (4), following said mixing member and located at a distance therefrom which is no greater than the flame pinching distance, and
- at least one member (5) for discharging the products of the reaction, connected to said reaction member,
The reaction member comprising a central zone, which over at least part of its cross-section has at least one first lining, adapted to define a multiplicity of spaces providing passages which, in at least one direction, have a dimension no greater than the pinching distance of the flame which may result from oxidation of said charge the oxidation reactor being characterised in that it contains at least one peripheral zone which, over at least part of its cross-section, has at least one second lining, having ceramic fibres forming a sleeve (10) which surrounds said first lining, said sleeve having a porosity which is at least 50% of its volume and being adapted to define a multiplicity of spaces providing passages which, in at least one direction, have a dimension from 2 to 1000 times smaller than the dimension of the passages in the central zone, so that the pressure loss in the second lining is greater than that in the first lining.

2. The reactor of Claim 1, wherein the dimension of the passages in the peripheral zone is from 5 to 100 times smaller than that of the passages in the central zone.

3. The reactor of Claim 1 or 2, wherein the lining of the central zone has at least one monolith over at least part of its cross-section, the monolith having a plurality of juxtaposed channels with axes which are substantially parallel with one another and with the axis of the reactor, with a dimension in at least one direction no greater than the pinching distance of the flame which may result from oxidation of said charge.

4. The reactor of any of Claims 1 to 3, wherein said second lining consists of pores or spaces having a dimension of 5X10⁻⁸ m to about 5X10⁻⁵ m.

5. The reactor of Claim 3 or 4, wherein the lining of the central zone has at least one monolith made of hard ceramic material over at least part of its cross-section.

6. The reactor of any of Claims 3 to 5, wherein the lining of the central zone is formed by superposing and possibly juxtaposing a plurality of monoliths , the distance between each adjacent monolith being less than the flame pinching distance, both in the vertical direction and in the horizontal plane in a case where a plurality of monoliths are juxtaposed.

7. The reactor of any of Claims 3 to 6, wherein the central zone has a catalyst in at least part of its volume.

8. The reactor of Claim 7, wherein the catalyst is supported by the walls of the channels of at least one monolith.

9. The reactor of any of Claims 1 to 8, wherein the sleeve surrounding the first lining extends over the whole length of the reaction member.

10. The reactor of any of Claims 1 to 9, wherein the sleeve surrounding the first lining extends over the whole length of the reaction member and the mixing member.

11. The reactor of any of Claims 1 to 10, wherein the sleeve surrounding the first lining is divided into at least two portions of equal or unequal length, interconnected so that the maximum distance between them is no greater than 0.5 times the flame pinching distance.

12. The oxidation reactor of any of Claims l to 11, characterised in that the reaction member has a first part, towards the mixing member, the central zone of which has a cross-sectional area smaller than the cross-sectional area of at least one second part of the central zone, following the first part, towards the discharge member.

13. The reactor of Claim 12, wherein the central zone of the reaction member has a nozzle shape, the cross-sectional area of the nozzle being smaller near the mixing member than near the discharge member.

14. The reactor of Claim 12 or 13, wherein the central zone of the reaction member has a nozzle shape near the mixing member, that the cross-section of the nozzle, at the level where it is connected to the mixing member 3 and over a length L1, has an area S1 smaller than or about equal to the area S of the cross-section of the mixing member at the level of said connection, that the cross-sectional area then increases substantially evenly over a length L2, to a value S2 equal to about 1.5 to 500 times S1, and that it is then kept substantially constant over a length L3, the sum L of the lengths L1, L2 and L3 being substantially equal to the length of the central zone.

15. The reactor of Claim 14, wherein the length L1 is such that the maximum temperature for the oxidation reaction in question is reached at a distance from the mixing member at least substantially equal to 0.5 times the length L1, and that the length L2 is such that the angle alpha of the nozzle is from about 15 to about 120°.

16. The reactor of Claim 14 or 15, wherein the maximum tenperature for the oxidation reaction in question is reached at a distance from the mixing menber substantially from 0.8 times to 1 times the value of the length L1.

17. The reactor of Claim 12, wherein the central zone of the reaction member has a venturi shape near the mixing member, the venturi comprising a convergent and a divergent part separated by a throat and having a section, at the level of its connection to the mixing member, of an area substantially equal to that of said member at the level of said connection; a section at the level of the throat of an area less than that of the mixing member at the level of its connection with said venturi; and a section at the end of the divergent part of an area greater than that of said throat.

18. The reactor of Claim 17, wherein the venturi has a length L1 from its connection to the mixing member to the end of the throat connected to the divergent part, the length L1 being such that the maximum tenperature for the oxidation reaction in question is reached at a distance from the mixing member at least substantially equal to 0.5 times the value of the length L1, wherein the angle beta of the convergent part is from about 30 to about 120°, and wherein the angle gamma of the divergent part is from about 15 to about 120°.

19. The oxidation reactor of any Claims 1 to 11 in which the central zone of the reaction member conprises s successive parts, characterised in that the first part, towards the mixing member, has a lining adapted to define a multiplicity of spaces with passages which have a cross-section of an area S1, said passages having -in at least one direction - a dimension no greater than the pinching distance of the flame which may result from oxidation of said charge, and that the last part, towards the discharge member, has a lining adapted to define a multiplicity of spaces with passages which have a cross-section of an area Ss greater than S1, said passages having - in at least one direction - a dimension no greater than the pinching distance of the flame which may result from oxidation of said charge, s being a positive integer greater than or equal to 2.

20. The reactor of Claim 19, wherein the central zone of the reaction member conprises s successive parts, each having a lining adapted to define a multiplicity of spaces providing passages, of a cross-sectional area which increases from one part to the next, from the first part to the last.

21. The reactor of Claim 19 or 20, wherein the central zone of the reaction member has three successive parts.

22. The reactor of Claim 21, wherein the first part, towards the mixing member, has a lining over a length L1, adapted to define passages of a cross-sectional area S1, wherein the second part, following the first part, has a lining over a length L2 adapted to define passages of a cross-sectional area S2, and wherein the third and last part, towards the discharge member, has a lining over a length L3 adapted to define passages of a cross-sectional area S3, the areas S1, S2 and S3 being such that the ratio S3:S1 is from 100:1 to about 4:1, and the ratio S2:S1 is from about 50:1 to about 1.2:1.

23. The reactor of Claim 22, wherein the length L1 and the area S1 are such that the maximum temperature for the oxidation reaction in question is reached at a distance from the mixing member at least substantially equal to the length L1.

24. The reactor of Claim 22 or 23, wherein the lengths L1 and L2 and the areas S1 and S2 are such that the maximum temperature of the oxidation reaction in question is reached at a distance from the mixing member substantially from the value of the length L1 to the value of the sum of lengths L1 + L2.

25. The reactor of any of Claims 19 to 24, wherein the central zone of the reaction member has an overall cross-section of substantially constant area and shape over its whole length.

26. The reactor of any of Claims 19 to 24, wherein the central zone of the reaction member has a nozzle shape, the area of the overall cross-section of the nozzle being smaller near the mixing member than near the discharge member.

27. The reactor of Claim 26, wherein the part of the overall cross-section of the nozzle which has the smallest area has one or more linings over its whole length, the linings having area dimension, cross-section of flow and length characteristics such that the maximum temperature for the oxidation reaction in question is reached in said part.

28. The reactor of Claim 26, wherein the part of the overall cross-section of the nozzle which has the smallest area has one or more linings over its whole length, the linines having area dimension, cross-section of flow and length characteristics such that the maximum temperature for the oxidation reaction in question is reached in one of the parts following said part.

29. The reactor of any of Claims 19 to 24, wherein the central zone of the reaction member, near the mixing member, is in the form of a venturi comprising a convergent and a divergent part separated by a throat, and wherein the venturi, at the level where it is connected to the mixing member, has an overall cross-section of an area substantially equal to that of said member at the level of said connection; an overall cross-section at the level of the throat of an area substantially less than that of the mixing member at the level of its connection to the venturi; and an overall cross-section at the end of the divergent part of an area larger than that of said throat.

30. The reactor of Claim 29, wherein the venturi has one or more linings over its whole length, with dimension, cross-section of flow area and length characteristics such that the maximum tenperature for the oxidation reaction in question is reached at a point located after the centre of the throat, in the direction in which the reacting fluids circulate.

31. Use of a reactor of any of claims 1 to 30 in a method of oxidising an oxidisable charge in gaseous phase with an oxidising gas or a mixture of gases including at least one oxidising gas, characterised in that the oxidisable charge and the oxidising gas are fed into a mixing zone, the gas mixture from the mixing zone is circulated in a reaction zone comprising a central zone and a peripheral zone, a pressure loss Δ P₁ is set up in the central zone and a pressure loss Δ P₂ in the peripheral zone, the pressure losses being such that substantially all the gas mixture from the mixing zone is reacted in said central zone of said reaction zone, and such that the pressure loss differential ΔP₂-ΔP₁ is positive, and the reaction products formed are recovered.

32. Use of the reactor of claim 31, wherein the pressure drop differential is from 10 Pascals to 0.5 Mpa and preferably from 100 Pascals to 0.4 MPa.

33. Use of the reactor of claim 31 or 32
characterised in that in at least one first part of the central zone of the reaction zone, towards the mixing zone, the mixture of gases is circulated at a speed V1, and that in at least one other subsequent part of said first part, towards the zone for discharging the products of the reaction, said mixture of gases from said first part is circulated at a speed Vf lower than said speed V1.

34. Use of the reactor of claim 33, wherein the speed V1 is from about 2 to about 300 m.s⁻¹ and the speed Vf is from about 0.05 to about 250 m.s⁻¹.

35. Use of the reactor of claim 33 or 34, wherein the speed ratio Vl:Vf is from about 2:1 to about 50:1.

36. Use of the reactor of any of Claims 33 to 35, wherein the mixture of gases is circulated in the central zone of the reaction zone, under conditions such that the maximum temperature for the oxidation reaction in question is reached in the zone of maximum speed, at a point located between the centre of said zone and the discharge zone end thereof.

37. Use of the reactor of any of claim 31 to 36 in controlled oxidation of a hydrocarbon charge by a mixture of gases including oxygen, with a view to producing a mixture of gases which can be used for synthesising ammonia or synthesising alcohols, including hydrogen and carbon monoxide.
